(19) Europäisches Patentamt
European Patent Office
Office européen des brevets

(11) **EP 4 761 155 A1**

(12) **EUROPEAN PATENT APPLICATION**
published in accordance with Art. 153(4) EPC

(43) Date of publication:
**17.06.2026 Bulletin 2026/25**

(21) Application number: **24884299.9**

(22) Date of filing: **23.09.2024**

(51) International Patent Classification (IPC):
**H04L 1/1812** (2023.01)

(52) Cooperative Patent Classification (CPC):
**H04L 1/1812; H04L 5/00; H04W 72/40**

(86) International application number:
**PCT/CN2024/120303**

(87) International publication number:
**WO 2025/092292 (08.05.2025 Gazette 2025/19)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **03.11.2023 CN 202311459952**

(71) Applicant: **CICT Connected and Intelligent
Technologies Co., Ltd.
Chongqing 400041 (CN)**

(72) Inventors:
• **WANG, Yakun**
  **Chongqing 400041 (CN)**
• **ZHAO, Rui**
  **Chongqing 400041 (CN)**
• **ZHENG, Shilei**
  **Chongqing 400041 (CN)**
• **WEN, Xiaoran**
  **Chongqing 400041 (CN)**

(74) Representative: **Murgitroyd & Company
165-169 Scotland Street
Glasgow G5 8PL (GB)**

(54) **SIDELINK TRANSMISSION METHOD AND APPARATUS, AND TERMINAL**

(57) The present application relates to the technical field of communications. Disclosed are a sidelink transmission method and apparatus, and a terminal. The method is applied to a first terminal. The method comprises: executing first-type coordination information transmission; and/or, executing physical sidelink feedback channel (PSFCH) transmission, wherein the PSFCH transmission comprises at least one of the following: first-type PSFCH transmission, which is used for carrying hybrid automatic repeat request acknowledgement (HARQ-ACK) information, second-type PSFCH transmission, which is used for carrying second-type coordination information, the second-type coordination information being conflict information, and third-type PSFCH transmission, which is used for avoiding channel occupancy time (COT) interruption.

Performing first type of coordination information transmission; and/or performing PSFCH transmission, where the PSFCH transmission comprises at least one of the following: first type of PSFCH transmission, used to carry HARQ-ACK information; second type of PSFCH transmission, used to carry second type of coordination information, where the second type of coordination information is conflict information; or third type of PSFCH transmission, used to avoid interruption of COT

101

**FIG. 1**

**Description**

**CROSS-REFERENCE TO RELATED APPLICATIONS**

The present application claims priority to Chinese Patent Application No. 202311459952.5, filed on November 3, 2023, which is incorporated herein by reference in its entirety.

**TECHNICAL FIELD**

This application relates to the field of communications technologies, and in particular to a sidelink transmission method, apparatus, and terminal.

**BACKGROUND**

In the sidelink communication, a terminal selects a resource according to a resource sensing result of the terminal. In this case, because a sensing result on a side of a sending terminal cannot reflect a channel environment on a side of a receiving terminal, the sensing result is vulnerable to subject to influence of a hidden node, an exposed node, half-duplex, and the like, resulting in that resource selected by the sending terminal may not be appropriate for the receiving terminal, or a resource selected by the sending terminal conflicts with a resource selected by another terminal.

**SUMMARY**

This application aims to provide a sidelink transmission method, apparatus, and terminal, so as to resolve a problem that a resource selected by a sending terminal is inappropriate for a receiving terminal or conflicts with a resource selected by another terminal.

According to a first aspect, to achieve the foregoing objective, an embodiment of this application provides a sidelink transmission method. The method is applied to a first terminal, and includes at least one of the following:

performing first type of coordination information transmission;
performing physical sidelink feedback channel PSFCH transmission, where the PSFCH transmission includes at least one of the following:

first type of PSFCH transmission, used to carry hybrid automatic repeat request acknowledgement HARQ-ACK information;
second type of PSFCH transmission, used to carry second type of coordination information, where the second type of coordination information is conflict information; or
third type of PSFCH transmission, used to avoid interruption of channel occupancy time COT.

Optionally, the method further includes:
receiving coordination request information transmitted by a second terminal, where the coordination request information includes at least one of the following:

a quantity of resource block sets RB set, used to indicate a quantity of RB set occupied for transmission of a physical sidelink control channel PSCCH and/or a physical sidelink shared channel PSSCH;
first RB set information, used to indicate a candidate RB set available for PSCCH and/or PSSCH transmission;
second RB set information, used to indicate an RB set on which the second terminal detects a C-LBT failure;
a first quantity of subchannels, used to indicate a quantity of subchannels occupied by PSCCH and/or PSSCH transmission in all occupied RB sets;
a resource reservation period;
a starting time of a resource selection window;
an ending time of a resource selection window; or
a resource set type, used to indicate a type of a resource set that is expected to be provided by the first terminal, wherein the type of the resource set includes a preferred resource set and/or a non-preferred resource set.

Optionally, the first type of coordination information includes at least one of the following:

a resource combination information set, used to indicate time-frequency information of a resource corresponding to at least one resource combination provided by the first terminal;

a reference slot location, used to indicate a location of a slot in which a first resource of a first resource combination in the at least one resource combination is located;

first resource location, used to indicate an offset value of a slot in which a first resource in each resource combination except the first resource combination in the at least one resource combination is located, relative to the reference slot;

a resource set type, used to indicate a type of a resource set provided by the first terminal, where the type of the resource set includes a preferred resource set and/or a non-preferred resource set;

lowest sub-channel indication, used to indicate a sub-channel with a smallest index corresponding to a first resource in each of the at least one resource combination that is provided by the first terminal; or

lowest RB set indication, used to indicate an RB set with a smallest index corresponding to a first resource in each of the at least one resource combination provided by the first terminal.

Optionally, resource combination information in the resource combination information set includes at least one of the following:

a time domain resource indication value TRIV, used to indicate time domain information corresponding to a resource in a resource combination;

a first frequency domain resource indication value FRIV, used to indicate sub-channel information corresponding to a resource in a resource combination; or

a second FRIV, used to indicate RB set information corresponding to a resource in the resource combination.

Optionally, the method further includes:

determining, according to PSCCH and/or PSSCH transmission resources that are reserved by the second terminal and for which a resource conflict occurs, one or more resources used for second type of PSFCH transmission; or

determining, according to a time-frequency resource in which sidelink control information SCI transmitted by the second terminal is located, one or more resources used for second type of PSFCH transmission, where the first terminal detects that a resource conflict occurs for PSCCH and/or PSSCH transmission resources indicated by the SCI.

Optionally, the determined one or more resources for second type of PSFCH transmission meet at least one of the following:

a time domain interval between slots in which any two adjacent resources used for second type of PSFCH transmission are located is a PSFCH resource period;

a first slot in which any resource used for second type of PSFCH transmission is located is located before a second slot in which PSCCH and/or PSSCH transmission resources that are reserved by the second terminal and for which a resource conflict occurs are located, and a quantity of slots between any of the first slot and the second slot is greater than or equal to a first value; or

any of the first slot is located after a third slot in which the SCI is located, and a quantity of slots between any one of the first slot and the third slot is greater than or equal to a second value.

Optionally, the method further includes:
determining first PSFCH transmission executable by the first terminal, according to at least one of a transmission index value of at least one PSFCH transmission that is to be executed by the first terminal, a power of the at least one PSFCH transmission, a quantity of the at least one PSFCH transmission, a power threshold, and a quantity threshold, where the transmission index value is related to a type of PSFCH transmission and/or a priority of PSFCH transmission, and the first PSFCH transmission meets at least one of the following:

a total power of the first PSFCH transmission is less than or equal to the power threshold;

a quantity of the first PSFCH transmission is less than or equal to the quantity threshold; or

a quantity of the first PSFCH transmission is greater than or equal to a third value.

Optionally, an index value of the first type of PSFCH transmission is less than an index value of the second type of PSFCH transmission, and the index value of the second type of PSFCH transmission is less than an index value of the third type of PSFCH transmission.

According to a second aspect, to achieve the foregoing objective, an embodiment of this application provides a sidelink transmission method. The methos is applied to a second terminal, and includes at least one of the following:

receiving first type of coordination information transmitted by a first terminal; or

receiving a PSFCH transmitted by the first terminal, wherein the PSFCH transmission performed by the first terminal includes at least one of the following:

first type of PSFCH transmission, used to carry HARQ-ACK information;
second type of PSFCH transmission, used to carry second type of coordination information, where the second type of coordination information is conflict information; or
third Type of PSFCH transmission, used to avoid interruption of COT.

Optionally, the method further includes:
transmitting coordination request information to the first terminal, where the coordination request information includes at least one of the following:

a quantity of resource block sets RB set, used to indicate a quantity of RB set occupied for transmission of PSCCH and/or PSSCH;
first RB set information, used to indicate a candidate RB set available for PSCCH and/or PSSCH transmission;
second RB set information, used to indicate an RB set on which the second terminal detects a C-LBT failure;
a first quantity of subchannels, used to indicate a quantity of subchannels occupied by PSCCH and/or PSSCH transmission in all occupied RB sets;
a resource reservation period;
a starting time of a resource selection window;
an ending time of a resource selection window; or
a resource set type, used to indicate a type of a resource set that is expected to be provided by the first terminal, where the type of the resource set includes a preferred resource set and/or a non-preferred resource set.

According to a third aspect, to achieve the foregoing objective, an embodiment of this application provides a sidelink transmission apparatus. The apparatus is applied to a first terminal, and includes at least one of the following:

a first execution module, configured to perform first type of coordinated information transmission; or
a second execution module, configured to perform PSFCH transmission, where the PSFCH transmission includes at least one of the following:

first type of PSFCH transmission, used to carry HARQ-ACK information;
second type of PSFCH transmission, used to carry second type of coordination information, where the second type of coordination information is conflict information;
third type of PSFCH transmission, used to avoid interruption of COT.

According to a fourth aspect, to achieve the foregoing objective, an embodiment of this application provides a sidelink transmission apparatus. The apparatus is applied to a second terminal, and includes a receiving module. The receiving module is configured to perform at least one of:

receiving first type of coordination information transmitted by a first terminal; or
receiving a PSFCH transmitted by the first terminal, where the PSFCH transmission includes at least one of the following:

first type of PSFCH transmission, used to carry HARQ-ACK information;
second type of PSFCH transmission, used to carry second type of coordination information, where the second type of coordination information is conflict information; or
third type of PSFCH transmission, used to avoid interruption of COT.

According to a fifth aspect, to achieve the foregoing objective, an embodiment of this application provides a user equipment, including a transceiver, a memory, a processor, and a computer program stored in the memory and running on the processor. When executing the computer program, the processor implements the sidelink transmission method according to the first aspect or the sidelink transmission method according to the second aspect.

According to a sixth aspect, to achieve the foregoing objective, an embodiment of this application provides a readable storage medium on which a program is stored. When being executed by a processor, the program implements the sidelink transmission method according to the first aspect or the sidelink transmission method according to the second aspect.

The foregoing technical solutions of this application have at least the following beneficial effects.

In the sidelink transmission method in embodiments of this application, the first terminal performs first type of coordination information transmission, and/or performs physical sidelink feedback channel PSFCH transmission. The PSFCH transmission includes at least one of the following: first type of PSFCH transmission, used to carry hybrid automatic repeat request acknowledgement HARQ-ACK information; second type of PSFCH transmission, used to carry second type of coordination information, where the second type of coordination information is conflict information; or third type of PSFCH transmission, used to avoid interruption of channel occupancy time COT. In this way, the second terminal can select a sending resource or perform resource reselection based on the first type of coordination information transmitted by the first terminal and/or information carried in PSFCH transmission, so that the second terminal selects a more appropriate sending resource and/or the resource selected by the second terminal does not conflict with a resource selected by another terminal.

## BRIEF DESCRIPTION OF THE DRAWINGS

FIG. 1 is a first schematic flowchart of a sidelink transmission method according to an embodiment of this application.

FIG. 2 is a second schematic flowchart of a sidelink transmission method according to an embodiment of this application.

FIG. 3 is a schematic diagram of a resource combination according to an embodiment of this application;

FIG. 4A is a first schematic diagram of determining a PSFCH transmission resource according to an embodiment of this application;

FIG. 4B is a second schematic diagram of determining a PSFCH transmission resource according to an embodiment of this application;

FIG. 4C is a third schematic diagram of determining a PSFCH transmission resource according to an embodiment of this application;

FIG. 4D is a fourth schematic diagram of determining a PSFCH transmission resource according to an embodiment of this application;

FIG. 4E is a fifth schematic diagram of determining a PSFCH transmission resource according to an embodiment of this application;

FIG. 4F is a sixth schematic diagram of determining a PSFCH transmission resource according to an embodiment of this application;

FIG. 5A is a first schematic diagram of a resource used for PSFCH transmission according to an embodiment of this application;

FIG. 5B is a second schematic diagram of a resource used for PSFCH transmission according to an embodiment of this application;

FIG. 6 is a first schematic structural diagram of a sidelink transmission apparatus according to an embodiment of this application;

FIG. 7 is a second schematic structural diagram of a sidelink transmission apparatus according to an embodiment of this application; and

FIG. 8 is a schematic structural diagram of a terminal according to an embodiment of this application.

## DETAILED DESCRIPTION OF THE EMBODIMENTS

To make the technical problems to be solved, technical solutions, and advantages of this application clearer, the following describes in detail with reference to the accompanying drawings and specific embodiments. In the following description, specific details such as specific configurations and components are provided only to help fully understand the embodiments of this application. Therefore, a person skilled in the art should understand that various changes and modifications may be made to the embodiments described herein without departing from the scope and spirit of this application. In addition, for clarity and simplicity, descriptions of known functions and constructions are omitted.

It should be understood that "an embodiment" or "one embodiment" mentioned throughout the specification indicates that a specific feature, structure, or characteristic related to the embodiments is included in at least one embodiment of this application. Therefore, "in an embodiment" or "in one embodiment" described throughout the specification does not necessarily refer to the same embodiment. In addition, these specific features, structures or characteristics may be incorporated in one or more embodiments in any suitable manner.

In various embodiments of this application, it should be understood that a sequence number of the following processes does not indicate an execution sequence. The execution sequence of the processes should be determined according to functions and internal logic of the processes, and should not constitute any limitation on the implementation process of the embodiments of this application.

In the embodiments provided in this application, it should be understood that "B corresponding to A" indicates that B is associated with A, and B may be determined according to A. However, it should be further understood that determining B according to A does not mean determining B according to A only, and B may be determined according to A and/or other information.

In the description of embodiments of this application, a related technical point is first described.

I. Inter-UE coordination (Inter-UE coordination, IUC) mechanism

In the inter-terminal coordination mechanism, there are two schemes:

Scheme 1 (Scheme 1): A coordinating terminal (UE-A) feeds back coordination information to a coordinated terminal (UE-B), where the coordination information includes a resource set (a preferred resource set (Preferred resource set) or a non-preferred resource set (Non-preferred resource set)), and the coordinated terminal determines an available resource set according to the resource set fed back by the coordinating terminal, and selects a sending resource.
Scheme 2 (Scheme 2): The coordinating terminal (UE-A) determines, according to the received resource indication information of the coordinated terminal (UE-B), whether a resource reserved by the coordinated terminal conflicts with another terminal. Herein, the another terminal is a terminal other than the UE-B, for example, the another terminal is the UE-A, or a UE other than the UE-A and the UE-B. If there is a resource conflict, the coordinating terminal indicates the conflict information to the coordinated terminal. After receiving the resource conflict indication information, the coordinated terminal triggers resource reselection on the resource for which the resource conflict occurs.

II. Definition of a round trip time (Round trip time, RTT) of a hybrid automatic repeat reQuest (Hybrid Automatic Repeat reQuest, HARQ) in a SL-U.

An interval between any two transmission resources in a transport block (Transport block, TB) needs to be greater than or equal to Z=a+b; in which,

a represents an interval between a last symbol of a first physical sidelink shared channel (Physical Sidelink Shared Channel, PSSCH) transmission resource and a first symbol of a last physical sidelink feedback channel (Physical Sidelink Feedback Channel, PSFCH) transmission resource corresponding to the PSSCH transmission; and
b indicates a sum of PSFCH receiving and processing time and sidelink retransmission preparation time.

The following describes in detail a sidelink transmission method, apparatus, and a terminal provided in the embodiments of this application with reference to the accompanying drawings.

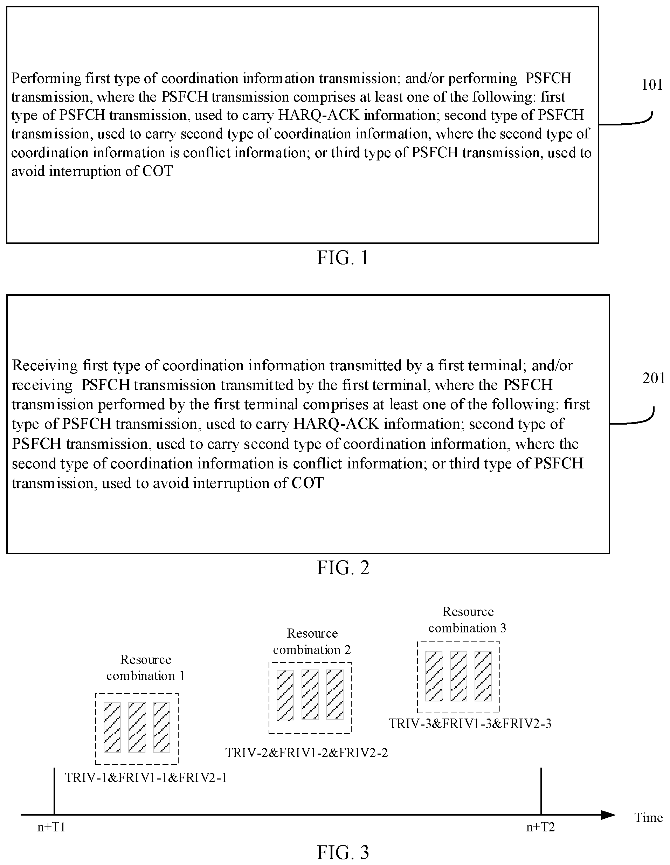

An embodiment of this application provides a sidelink transmission method. The method is applied to a first terminal. The first terminal is a coordinating UE in an IUC or a UE that needs to perform PSFCH transmission. As shown in FIG. 1, the method includes step 101.

Step 101 includes at least one of the following:

performing first type of coordination information transmission; where the first type of coordination information is coordination information that includes a preferred resource set or a non-preferred resource set, that is, coordination information defined in the foregoing IUC scheme 1; the first type of coordination information is carried in a media access control (Media Access Control, MAC) control element (Control Element, CE), or the first type of coordination information is carried in a MAC CE and a sidelink control information (Sidelink Control Information, SCI) format 2-C (format 2-C); in addition, for the IUC mechanism triggered by the request information, the first terminal should receive request information transmitted by the second terminal before performing the first type of coordination information transmission, where the request information is carried in MAC CE, or carried in MAC CE and SCI format 2-C; the request information or the coordination information is transmitted by using the PSSCH; or

performing PSFCH transmission, where the PSFCH transmission includes at least one of the following:

first type of PSFCH transmission, used to carry HARQ-ACK information;
second type of PSFCH transmission, used to carry second type of coordination information, where the second type of coordination information is conflict information, that is, the second type of PSFCH transmission is used to carry conflict information, and the conflict information is coordination information defined in the foregoing IUC scheme 2; or
third type of PSFCH transmission, used to avoid interruption of channel occupancy time (Channel Occupied Time, COT).

It should be noted herein that, when the first terminal performs the first type of coordination information transmission or the second type of PSFCH transmission, the first terminal is coordinating UE. When the first terminal performs the first type of PSFCH transmission, the first terminal is a UE receiving the PSCCH/PSSCH transmission. When the first terminal performs the third type of PSFCH transmission, the first terminal is COT initiating UE (COT initiating UE) or COT responding UE (COT responding UE).

In the sidelink transmission method in embodiments of this application, the first terminal performs the first type of coordinated information transmission, and/or performs PSFCH transmission. The PSFCH transmission includes at least one of the following: first type of PSFCH transmission, used to carry HARQ-ACK information; second type of PSFCH transmission, used to carry second type of coordination information, where the second type of coordination information is conflict information; or the third type of PSFCH transmission, used to avoid COT interruption. In this way, the second terminal can select a sending resource or perform resource reselection based on the first type of coordination information transmitted by the first terminal and/or information carried in PSFCH transmission, so that the second terminal selects a more appropriate sending resource and/or the resource selected by the second terminal does not conflict with a resource selected by another terminal, thereby improving system data transmission reliability.

Further, in an optional implementation manner, the method further includes:

receiving coordination request information transmitted by a second terminal. Herein, the second terminal is coordinated UE in the IUC, and the coordination request information includes at least one of the following:

a quantity of resource block set (Resource Block set, RB set), used to indicate a quantity of RB set occupied by physical sidelink control channel (Physical Sidelink Control Channel, PSCCH) and/or PSSCH transmission; and specifically, the quantity of RB set is a quantity of RB set occupied by PSCCH/PSSCH transmission in a slot, or the quantity of RB set is a quantity of RB set occupied by a single PSCCH/PSSCH transmission;

first RB set information, used to indicate a candidate RB set available for PSCCH and/or PSSCH transmission; and specifically, the first RB set information is, for example, an RB set list, and the first RB set information is specifically a candidate RB set available for PSCCH/PSSCH transmission in a slot, or the first RB set information is a frequency domain range of a resource selection window, that is, a resource is selected for transmission of PSCCH and/or PSSCH in the frequency domain range, or the first terminal determines preferred resource set or non-preferred resource set in the frequency domain range;

second RB set information, used to indicate that an RB set on which the second terminal detects a consistent listen-before-talk (Consistent listen-before-talk, C-LBT) failure (failure); and when the coordination request information carries the second RB set information, and when determining the preferred resource set (Preferred resource set), the first terminal (coordinating UE) needs to exclude, in a resource excluding process, a candidate resource that overlaps the RB set indicated by the second RB set information from the candidate resource set; alternatively, when determining a non-preferred resource set (Non-preferred resource set), the first terminal (coordinating UE) determines a candidate resource overlapping with the RB set indicated by the second RB set information as the non-preferred resource; or when determining the non-preferred resource set, the first terminal determines a resource in the RB set indicated by the second RB set information as the non-preferred resource;

a first quantity of subchannels, used to indicate a quantity of subchannels occupied by PSCCH and/or PSSCH transmission in all occupied RB set; and specifically, the first quantity of subchannels is a quantity of subchannels occupied by a single PSCCH/PSSCH transmission in a slot (in all occupied RB set);

a second quantity of subchannels, used to indicate a quantity of subchannels occupied by PSCCH and/or PSSCH transmission in one RB set; and specifically, the second quantity of subchannels is a quantity of subchannels occupied by a single PSCCH/PSSCH transmission in a slot in one RB set; and quantities and indexes of sub-channels occupied by PSCCH and/or PSSCH transmission in different occupied RB sets are respectively the same;

a resource reservation period/resource reservation interval;

a starting time of the resource selection window;

an ending time of the resource selection window; or

a resource set type, used to indicate a type of a resource set that is expected to be provided by the first terminal, where the type of the resource set includes a preferred resource set (Preferred resource set) and/or a non-preferred resource set (Non-preferred resource set).

It should be noted herein that the first terminal may trigger the IUC mechanism ((Request-based IUC scheme 1)) based on the coordination request information of the second terminal, or may trigger the IUC mechanism (Condition-based IUC scheme 1) based on a condition. Because the first terminal (the coordinating UE) needs to determine the preferred resource set or the non-preferred resource set according to the foregoing parameter (the parameter carried in the foregoing coordination request information), the foregoing parameter may be obtained from the coordination request information for the Request-based IUC scheme 1. For the Condition-based scheme 1, because there is no coordination request information, the first terminal (the coordinating UE) may determine the related parameter based on configuration, pre-configuration, pre-definition or implementation of the UE.

In an optional implementation, the first type of coordination information includes at least one of the following:

a resource combination information set, used to indicate time-frequency information of a resource corresponding to at least one resource combination; and that is, each resource combination information in the resource combination information set is determined by time-frequency information of a resource in each resource combination provided by the first terminal; herein, the preferred resource set or the non-preferred resource set includes one or more resource combinations;

a reference slot location, used to indicate a location of a slot in which a first resource in a first resource combination in the at least one resource combination is located; herein, in a time domain, the first resource in the first resource combination may be understood as a resource whose time domain location is the earliest in all resources included in preferred resource set or non-preferred resource set, that is, the first resource;

first resource location indication, used to indicate an offset value of a slot in which a first resource in each resource combination except the first resource combination in the at least one resource combination is located relative to the reference slot, and the first resource in each resource combination is located before another resource in the resource combination in a time domain;

a resource set type, used to indicate a type of a resource set provided by the first terminal, where the type of the resource set includes a preferred resource set (Preferred resource set) and/or a non-preferred resource set (Non-preferred resource set);

lowest sub-channel indication, used to indicate a sub-channel with a smallest index corresponding to a first resource in each of the at least one resource combination that is provided by the first terminal; or

lowest RB set indication, used to indicate an RB set with a smallest index corresponding to a first resource in each of the at least one resource combination provided by the first terminal.

It should be noted herein that in the foregoing two optional implementation manners, the coordination request information/coordination information includes information related to the RB set, so that the sidelink transmission method in embodiments of this application can solve the following problem: an interlaced resource block (Interlaced resource block, IRB) structure is introduced in sidelink unlicense (Sidelink Unlicense, SL-U), resulting in IUC mechanism cannot be applied.

In a specific implementation, each resource combination information in the resource combination information set includes at least one of the following:

a time domain resource indication value (Time resource indicator value, TRIV), used to indicate time domain information corresponding to a resource in a resource combination; and specifically, if a resource combination includes two resources, TRIV is used to indicate time domain information of a second resource; if a resource combination includes three resources, TRIV is used to indicate time domain information of the second resource and a third resource;

a first frequency domain resource indication value (Frequency resource indicator value, FRIV), used to indicate sub-channel information corresponding to a resource in a resource combination; and specifically, if a resource combination includes two resources, the FRIV is used to indicate a subchannel corresponding to a second resource, and includes a starting subchannel and a quantity of subchannels; if a resource combination includes three resources, the FRIV is used to indicate a sub-channel corresponding to the second resource and a third resource, and includes a starting sub-channel and a quantity of sub-channels; or

a second FRIV, used to indicate RB set information corresponding to a resource in the resource combination.

Specifically, if a resource combination includes two resources, the FRIV is used to indicate an RB set corresponding to a second resource, and includes a starting RB set and a quantity of RB set. If a resource combination includes three resources, the FRIV is used to indicate an RB set corresponding to the second resource and a third resource, and includes a starting RB set and a quantity of RB set.

Herein, a related SCI is described when the IUC mechanism (that is, the first type of coordination information or the coordination request information is transmitted) is supported.

First-stage SCI (1st-stage SCI) includes at least one of the following:

a first indication field, used to indicate a format of second-stage SCI (2nd-stage SCI); or

a second indication field, used to distinguish an information format included in the second -stage SCI indicated by the first indication field.

Specifically, a description of a related indication field of the 1st-stage SCI is shown in the following Table 1.

Table 1

| First indication field in 1st stage SCI | Second indication field in 1st stage SCI | 2nd stage SCI format |
|---|---|---|
| Fourth value (e.g., 10) | Fifth value (e.g., 0) | SCI format 2-C1 |
| | Sixth value (e.g., 1) | SCI format 2-C2 |

Content included in the SCI format 2-C1 is the conventional art. For details, one may refer to a definition in section 8.4.1.3 in TS 38.212 version 17.6.0.

Content included in the SCI format 2-C2 is:

An HARQ process number (HARQ process number), a new data indicator (New data indicator), a redundancy version (Redundancy version), a source ID (Source ID), a destination ID (Destination ID), a HARQ feedback enabled/disabled indicator (HARQ feedback enabled/disabled indicator), and a CSI request (CSI request);

request information/coordination information indication; if the value is set to 0, it indicates that the SCI format 2-C includes coordination information. The coordination information includes at least one of the following: a resource combination (resource combination information set), a first resource location, a reference slot location, a resource set type, a lowest sub-channel indication, or a lowest RB set indication. If the value is set to 1, it indicates that the SCI format 2-C includes request information. The request information includes at least one of the following: a quantity of RB set, first RB set information, second RB set information, a quantity of subchannels (a quantity of first subchannels and/or a quantity of second subchannels), a resource reservation interval/a resource reservation period, a starting time and an ending time of a resource selection window, or a resource set type.

Further, before the first terminal transmits the first type of coordination information, the method further includes: determining a resource set provided by the first terminal.

If the resource set provided by the first terminal is a preferred resource set, the preferred resource set determined by the first terminal needs to meet the following condition:

(1) the preferred resource set is a remaining candidate resource set after the first terminal executes the resource exclusion based on the sensing result and the Skip slot (unmonitored slot), where the first terminal does not need to exclude a candidate resource overlapping the RB set on which the first terminal detects the C-LBT failure.

Herein, it should be noted that currently, the first terminal (coordinating UE) performs TS 38.214 section 8.1.4, and determines that a remaining candidate resource set that meets a condition is the preferred resource set. However, in a current resource exclusion process, a resource exclusion due to the C-LBT failure is added, and a resource corresponding to the C-LBT failure is only not applicable to the first terminal for transmitting, and is unnecessary to affect the second terminal. Therefore, the resource exclusion is unnecessary for the first terminal. However, if an RB set on which the second terminal detects the C-LBT failure is included in the coordination request information, it needs to exclude candidate resources overlapping the RB set. In short, when determining the preferred resource set, the first terminal needs to exclude a candidate resource overlapping an RB set on which the second terminal detects the C-LBT failure (provided that the request information includes the information), and does not need to exclude a candidate resource overlapping an RB set on which the first terminal detects the C-LBT failure.

(2) the preferred resource set is a remaining candidate resource set after the first terminal excludes a resource in a slot on which receiving is not expected, where the first terminal is a receiving UE of the coordinated UE.

If the type of the resource set provided by the first terminal is the non-preferred resource set, the resource in the non-preferred resource set determined by the first terminal includes:

a resource reserved by another UE, and a corresponding reference signal received power (Reference Signal Received Power, RSRP) measurement value is greater than a first RSRP threshold configured (pre-configured);

a resource reserved by another UE, and a corresponding RSRP measurement value is lower than a second RSRP threshold configured (pre-configured); where the first terminal is a receiving UE of another UE;

a resource on a slot for which the first terminal does not expect to perform SL receiving due to a half-duplex limitation; and

a resource overlapping or in an RB set on which the first terminal detects the C-LBT failure.

The following describes an implementation process of a request-based IUC mechanism with reference to FIG. 3.

First, as the coordinated UE, the UE-B transmits coordination request information to the UE-A (coordinating UE). The coordination request information includes:

a quantity of RB set being 2, which indicates that a quantity of RB set occupied by a single PSCCH/PSSCH transmission is 2;

a quantity of sub-channels (a quantity of second sub-channels) being 2, which indicates that a quantity of sub-channels occupied by a single PSCCH/PSSCH transmission in each RB set is 2, two sub-channels occupied in each RB set are sub-channels with consecutive indexes, and indexes corresponding to sub-channels occupied in different RB sets are the same;

the resource reservation period is 100ms;

a starting time and an ending time of the resource selection window are shown in FIG. 3, and are respectively represented as n+T1 and n+T2; and

a type of the resource set is the preferred resource set, that is, the UE-A needs to determine the preferred resource set.

Second, after receiving the foregoing coordination request information, the UE-A performs resource exclusion based on the foregoing parameter, determines the remaining candidate resource set as the preferred resource set, and feeds back the coordination information to the UE-B. As shown in FIG. 3, the preferred resource set includes nine resources, and may be classified into three resource combinations. A location of a resource in each resource combination is indicated by (TRIV&FRIV1&FRIV2). A time domain location of the last two resources in each resource combination may be obtained by using TRIV, a starting subchannel and a quantity of subchannels occupied by the last two resources in each resource combination, and a quantity of subchannels occupied by a first resource, may be obtained by using FRIV1. A starting RB set and a quantity of RB sets occupied by the last two resources in each resource combination, and a quantity of RB set occupied by the first resource, may be obtained by using FRIV2. In addition, the coordination information further needs to indicate a starting sub-channel (a sub-channel with a smallest index) and a starting RB set (a RB set with a smallest index) occupied by the first resource in each resource combination.

Further, in an optional implementation manner, the method further includes:

determining, according to the PSCCH and/or the PSSCH transmission resources that are reserved by the second terminal and for which a resource conflict occurs, one or more resources used for the second type of PSFCH transmission; the PSCCH and/or PSSCH transmission resources that are reserved by the second terminal and for which a resource conflict occurs indicates: a first resource that is reserved by the first-stage SCI (1st-stage SCI) transmitted by the second terminal, and a resource conflict occurs for the resource; for example, the 1st-stage SCI reserves two resources, and herein the above PSCCH and/or PSSCH transmission resource refers to a first resource reserved by the 1st-stage SCI n and a resource conflict occurs for the resource; multiple second type of PSFCH transmission resources are located in different slots; or

determining, according to a time-frequency resource in which the sidelink control information SCI (1st-stage SCI, that is, SCI format 1-A) transmitted by the second terminal is located, one or more resources used for second type of PSFCH transmission, where the first terminal detects a resource conflict for the PSCCH and/or PSSCH transmission resources reserved by the second terminal and indicated by the SCI.

That is, if the first terminal detects that a resource conflict occurs for a resource used for PSCCH/PSSCH transmission reserved by the second terminal, the first terminal needs to determine, according to a resource for which a resource conflict occurs, a resource used for second type of PSFCH transmission (carrying the conflict information). Alternatively, the first terminal needs to determine, according to a time-frequency resource (transmitted by the PSCCH/PSSCH) in which the SCI corresponding to the resource for which the resource conflict occurs is located, a resource used for second type of PSFCH transmission (carrying the conflict information).

An alternative expression manner of the present optional implementation is as follows. The first terminal determines N or a at most N second type of PSFCH transmission resource locations, based on a conflicting reserved resource (that is, the first terminal detects that the PSCCH/PSSCH transmission resource reserved by the second terminal conflicts with a transmission resource of another UE or the first terminal), where N is configured, pre-configured or a pre-defined. Alternatively, the first terminal determines the N or at most N second type of PSFCH transmission resource locations, based on a time-frequency resource in which a SCI reserving the conflicting resource is located (the SCI transmitted by the second terminal reserves one resource, the first terminal detects that a conflict occurs for the reserved resource, and the first terminal determines the location of the second type of PSFCH transmission resource based on the time-frequency resource in which the SCI is located).

Herein, it should be noted that a definition of an HARQ round trip time (Round trip time, RTT) is modified in the SL-U, so that a single PSSCH transmission may correspond to one or more candidate PSFCH transmission. However, after a conflicting PSCCH/PSSCH transmission resource is detected in the IUC Scheme 2, only one corresponding PSFCH transmission resource is determined, and a method for determining the PSFCH transmission resource in a case in which the PSSCH transmission corresponds to multiple candidate PSFCH transmission is not provided. According to this optional implementation, locations of resources for multiple second type of PSFCH transmission can be determined, thereby solving the foregoing problems in the conventional art.

In a specific implementation manner, in the foregoing optional implementation, the determined one or more resources used for second type of PSFCH transmission meet at least one of the following:

a time domain interval between slots in which any two adjacent resources used for second type of PSFCH transmission are located is a PSFCH resource period;

a first slot in which any resource used for second type of PSFCH transmission is located is located before a second slot in which PSCCH and/or PSSCH transmission resources that are reserved by the second terminal and for which a resource conflict occurs are located, and a quantity of slots between any of the first slot and the second slot is greater than or equal to a first value; for example, a resource for the second type of PSFCH (in a time domain) is located before the conflicting resource, and an interval between a slot in which any resource for the second type of PSFCH is located and a slot in which the conflicting resource is located includes at least T3 (in a resource pool) slots, where T3 is equal to $T_{proc,1}^{SL}$, and a definition of $T_{proc,1}^{SL}$ is shown in the following Table 2;

Table 2

| Subcarrier spacing (kHz) | $\overline{T_{proc,1}^{SL}}$ [slots] |
|---|---|
| 15 | 3 |
| 30 | 5 |
| 60 | 9 |
| 120 | 17 |

any of the first slot is located after a third slot in which the SCI is located, and a quantity of slots between any of the first slots and the third slots is greater than or equal to a second value. That is, a slot in which any resource for the second type of PSFCH transmission is located is after a slot in which the SCI is located, at least a second value of slots are located between the two slots.

Herein, the first value and the second value are configured, preconfigured, or protocol predefined values.

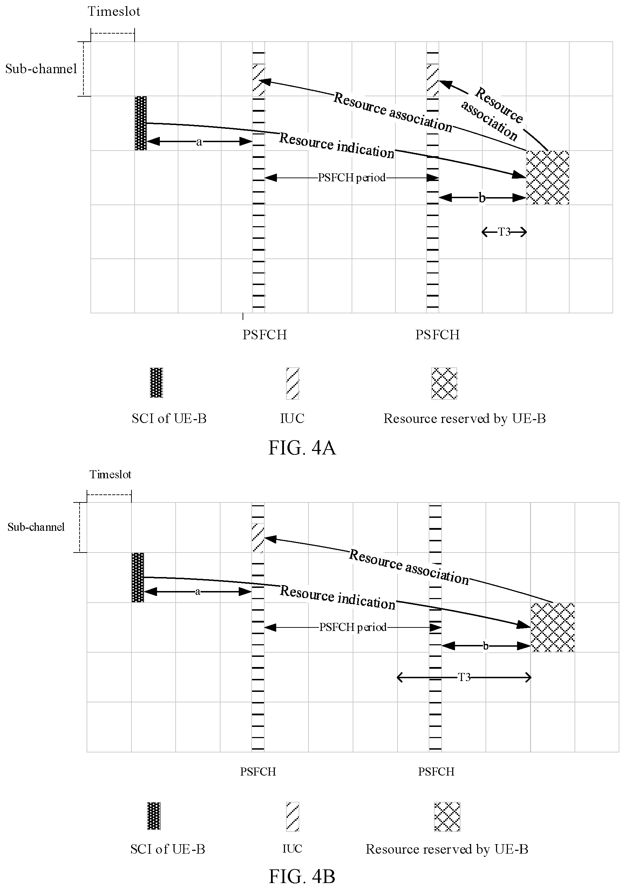

The following describes a resource determining process used for second-type PSFCH transmission in the foregoing implementation with reference to FIG. 4A to FIG. 4F.

As shown in FIG. 4A to FIG. 4F, an interval between an initial transmission resource and a retransmission resource includes two groups of PSFCH resources in different slots, that is, HARQ-ACK feedback information corresponding to the initial transmission (first type of PSFCH transmission) has two candidate transmission occasions.

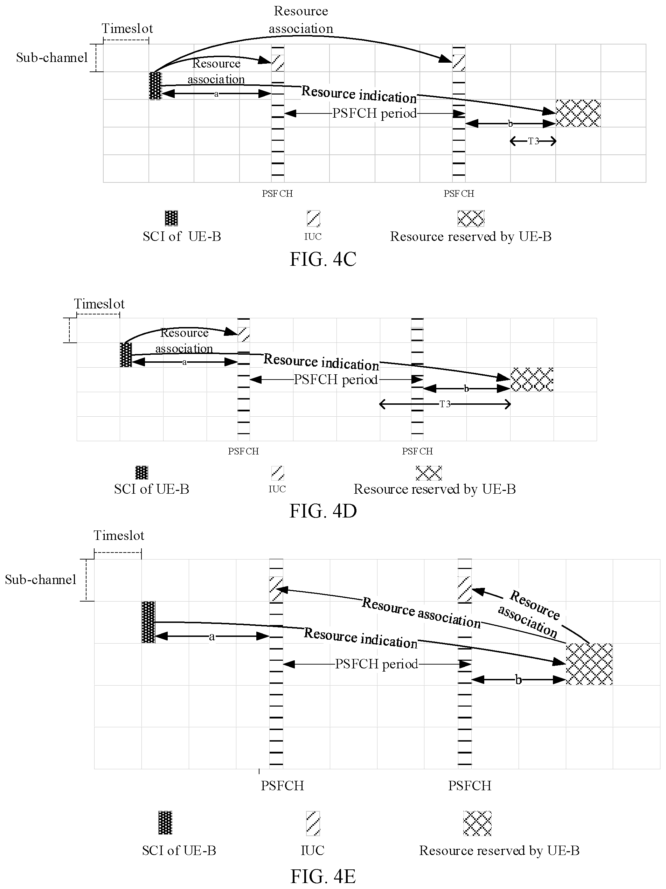

In the IUC scheme 2-1 (determining the resources for the second type of PSFCH transmission according to the conflicting resources), a resource for transmitting the PSFCH (the second type of PSFCH transmission) carrying the conflict information is associated with the conflicting PSCCH/PSSCH resources (that is, the resources reserved by the UE-B in FIG. 4A, FIG. 4B, and FIG. 4E), that is, the resource for transmitting the second type of PSFCH is determined according to the conflicting PSCCH/PSSCH transmission resource, and the resource for transmitting the second type of PSFCH is located before the conflicting resources. In addition, in consideration of the processing delay (for example, receiving the conflict information and reselection preparation time), it is required that the interval between the resource for transmitting the second type of PSFCH and the conflicting resource is at least T3 slots (logical slots).

As shown in FIG. 4A, because an interval b between a slot in which a last group of PSFCH resources are located and a conflicting resource (a resource reserved by a SCI of a UE-B) is greater than T3, the conflicting resource may be associated with one resource for transmitting the second type of PSFCH in each PSFCH slot, and a time domain interval between the two resources for transmitting the second type of PSFCH is a PSFCH period (that is, located in two adjacent slots that include PSFCH resources).

In this way, in a PSFCH transmission process, if the $1^{st}$ second type of PSFCH is not transmitted (for example, the LBT fails or the current PSFCH transmission needs to be abandoned based on a priority comparison), the $2^{nd}$ second type of PSFCH transmission continues.

As shown in FIG. 4B, because an interval b between a slot in which a last group of PSFCH resources are located and a conflicting resource is less than T3, the conflicting resource can only associate one resource for transmitting the second type of PSFCH in the first group of PSFCH resources.

As shown in FIG. 4E, when a PSFCH resource is associated with a conflicting resource, resources for transmitting two PSFCHs associated with the conflicting resource may be determined.

In the IUC scheme 2-2 (determining the resources for the second type of PSFCH transmission according to the conflicting resources), a resource for transmitting the PSFCH (the second type of PSFCH transmission) carrying the conflict information is associated with a time-frequency resource in which an SCI indicating the conflicting PSCCH/PSSCH resource is located, that is, the resource for transmitting the second type of PSFCH is determined according to the time-frequency resource in which the SCI indicating the conflicting PSCCH/PSSCH transmission resource is located, and the resource for transmitting the second type of PSFCH is located after the SCI and before the conflicting resources. In addition, in consideration of the processing delay (for example, receiving the conflict information and reselection preparation time), it is required that the interval between the resource for transmitting the second type of PSFCH and the conflicting resource is at least T3 slots (logical slots).

As shown in FIG. 4C, because an interval b between a slot in which a last group of PSFCH resources are located and a conflicting resource (a resource reserved by the SCI of the UE-B) is greater than T3, a resource in which the SCI is located may be associated with one resource for transmitting the second type of PSFCH in each PSFCH slot, and a time domain interval between the two resources for transmitting the second type of PSFCH is a PSFCH period (that is, located in two adjacent slots that include the PSFCH resource).

In this way, in a PSFCH transmission process, if the $1^{st}$ second type of PSFCH is not transmitted (for example, the LBT fails or the current PSFCH transmission needs to be abandoned based on a priority comparison), the $2^{nd}$ second type of PSFCH transmission continues.

As shown in FIG. 4D, because an interval b between a slot in which a last group of PSFCH resources are located and a conflicting resource (a resource reserved by the SCI of the UE-B) is less than T3, a resource in which the SCI is located can only associate one resource for transmitting the second type of PSFCH in the first group of PSFCH resources.

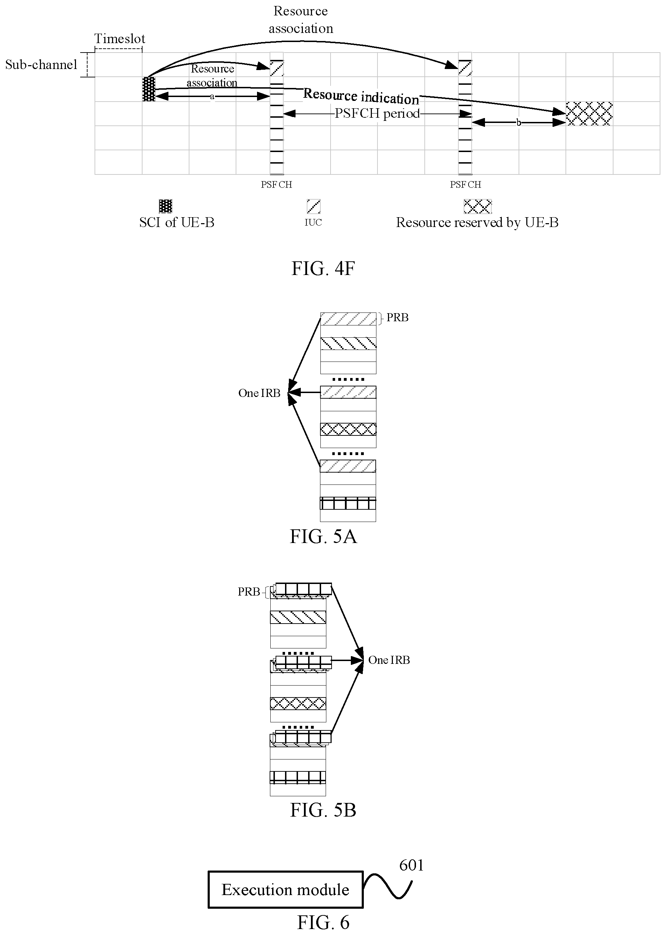

As shown in FIG. 4F, when the PSFCH resource is associated with the SCI indicating the conflicting resource, two resources for PSFCH transmission associated with the SCI indicating the conflicting resource may be determined.

Further, in an optional implementation manner, the method further includes:

determining first PSFCH transmission executable by the first terminal, according to at least one of a transmission index value of at least one PSFCH transmission that is to be executed by the first terminal, a power of the at least one PSFCH transmission, a quantity of the at least one PSFCH transmission, a power threshold, and a quantity threshold, where the at least one PSFCH transmission that is to be executed by the first terminal is the at least one PSFCH transmission scheduled for the terminal; the determining first PSFCH transmission executable by the first terminal includes determining a power of each PSFCH transmission in the first PSFCH transmission and determining a quantity of times of PSFCH transmission included in the first PSFCH transmission; the transmission index value is related to a type of PSFCH transmission and/or a priority of PSFCH transmission, and the first PSFCH transmission meets at least one of the following:

a total power of the first PSFCH transmission is less than or equal to the power threshold;

a quantity of the first PSFCH transmission is less than or equal to the quantity threshold; or

a quantity of the first PSFCH transmission is greater than or equal to a third value, where the third value is 1 for example.

A specific example of an optional implementation manner is as follows.

First, on one hand, it is determined whether a quantity of PSFCH transmissions that need to be scheduled for the first terminal is greater than a quantity threshold; on the other hand, a total power of PSFCH transmissions scheduled is determined according to power of each PSFCH transmission scheduled for the first terminal, to determine whether the total power is greater than the power threshold.

Second, if a quantity of scheduled PSFCH transmissions is less than or equal to the quantity threshold and a total power of scheduled PSFCH transmissions is greater than the power threshold, a first PSFCH transmission that can be executed by the first terminal is determined according to a transmission index value transmitted by each PSFCH, power transmitted by each PSFCH, and a power threshold, where the first PSFCH transmission includes one or more PSFCH transmissions, and the total power of the first PSFCH transmission is less than or equal to a power threshold; or

if a quantity of scheduled PSFCH transmissions is greater than the quantity threshold, a first PSFCH transmission that can be executed by the first terminal is determined according to a transmission index value of each PSFCH transmission, a power of each PSFCH transmission, a power threshold, and a quantity threshold, where the first PSFCH transmission includes one or more PSFCH transmissions, a total power of the first PSFCH transmission is less than or equal to a power threshold, and a quantity of PSFCH transmissions included in the first PSFCH transmission is less than or equal to the quantity threshold; or

if a quantity of scheduled PSFCH transmissions is less than or equal to the quantity threshold and a total power of scheduled PSFCH transmissions is less than or equal to the power threshold, it is determined that the first PSFCH transmission that can be executed by the first terminal includes all PSFCH transmissions scheduled for the first terminal.

Specifically, an index value of the first type PSFCH transmission is less than an index value of the second type of PSFCH transmission, and an index value of the second type of PSFCH transmission is less than an index value of the third type of PSFCH transmission. When PSFCH transmission is performed, PSFCH transmission with a smaller transmission index value is performed with a high priority. In other words, the first type of PSFCH transmission takes precedence over the second type of PSFCH transmission, and the second type of PSFCH transmission takes precedence over the third type of PSFCH transmission.

For example, an index value of the first type of PSFCH transmission is equal to a value of a priority of a first type of transmission, and an index value of the second type of PSFCH transmission is equal to (a value of a priority of the second type of PSFCH transmission +8). For example, an index value of the second type of PSFCH transmission whose priority is 1 is 9. Index values of the third type of PSFCH transmission are all 17.

It should be noted herein that, on the basis of configuring or pre-configuring or pre-defining a priority corresponding to the third type of PSFCH transmission, when determining a transmission index value of each PSFCH transmission, sorting is first performed according to a type of PSFCH transmission (the first type of PSFCH transmission takes precedence over the second type of PSFCH transmission, and the second type of PSFCH transmission takes precedence over the third type of PSFCH transmission). Then sorting is performed according to a priority value for each type of PSFCH transmission. For example, the PSFCH transmission that needs to be executed includes two first type of PSFCH transmissions (priority values are respectively 1 and 2), two second type of PSFCH transmissions (priority values are respectively 1 and 2), and two third type of PSFCH transmissions (a priority is configured as 8, that is, a priority of the third type of PSFCH transmissions is a lowest priority). The transmission index values of the six PSFCH transmissions that need to be executed are respectively: a transmission index value of the first type of PSFCH transmission whose priority value is 1 is 1, a transmission index value of the first type of PSFCH transmission whose priority value is 2 is 2, a transmission index value of the second type of PSFCH transmission whose priority value is 1 is 9, a transmission index value of the second type of PSFCH transmission whose priority value is 2 is 10, and a transmission index value of each of two third type of PSFCH transmissions whose priority value is 8 is 24, or is 17 by default (greater than the transmission index values of the first type and second type of PSFCH transmission).

It should be further noted that, based on a priority corresponding to the third type of PSFCH transmission that is not configured or pre-configured or pre-defined, when determining a transmission index value of each PSFCH transmission, sorting is first performed according to a type of the PSFCH transmission (the first type of PSFCH transmission takes precedence over the second type of PSFCH transmission, and the second type of PSFCH transmission takes precedence over the third type of PSFCH transmission). Then, for the first type of PSFCH transmission and the second type of PSFSCH transmission, sorting is performed according to a priority value (a sorting process is the same as the foregoing process, and details are not described herein). For the third type of PSFCH transmission, a transmission index value is randomly allocated to each PSFCH transmission in the third type of PSFCH transmission, and the randomly allocated transmission index value needs to be greater than the first type of PSFCH transmission index value and the second type of PSFCH transmission index value, or is 17 by default (greater than the first type of PSFCH transmission index value and the second type of PSFCH transmission index value).

That is, when the first terminal needs to perform PSFCH transmission, a power and/or a transmission quantity need to be limited, so as to ensure that a total quantity of times of actual PSFCH transmissions does not exceed the quantity threshold, and a total power of actual PSFCH transmissions does not exceed the power threshold.

Herein, it is assumed that the first terminal supports third type of PSFCH transmission that avoids COT interruption (information carried in the third type of PSFCH transmission is not limited herein), and a priority corresponding to the third type of PSFCH transmission is a configured, preconfigured, or predefined priority, or a priority of the third PSFCH transmission is a lowest priority. A control process of the PSFCH is specifically as follows:

Power limitation: the actual PSFCH transmission is determined based on the transmission index value sorting, so as to ensure that the total power of actual PSFCH transmission does not exceed the power threshold. The PSFCH transmission may include a first type of PSFCH transmission, and/or a second type of PSFCH transmission, and/or a third type of PSFCH transmission. In other words, if the total power of all types of PSFCH transmission exceeds the power threshold, the third type of PSFCH transmission is preferentially abandoned (assuming that the transmission index value of the third type of PSFCH transmission is greater than the transmission index value of the first type of PSFCH transmission and the transmission index value of the second type of PSFCH transmission, or that the priority of the third type of PSFCH transmission is lower than the priority of the first type of PSFCH transmission and the priority of the second type of PSFCH transmission).

Limitation on a quantity of transmissions: if a total quantity of times of PSFCH transmissions exceeds a quantity threshold, PSFCH transmissions with a smaller transmission index value (corresponding to a higher priority) are preferentially selected based on the transmission index value, and a quantity of times of PSFCH transmissions selected is less than or equal to the quantity threshold. In other words, if a total quantity of times of PSFCH transmission exceeds a quantity threshold, the third type of PSFCH transmission is preferentially abandoned (assuming that a transmission index value of the third type of PSFCH transmission is greater than a transmission index value of the first type of PSFCH transmission and a transmission index value of the second type of PSFCH transmission, or that a priority of the third type of PSFCH transmission is lower than a priority of the first type of PSFCH transmission and a priority of the second type of PSFCH transmission).

It should be noted herein that a resource occupied by single PSFCH transmission in embodiments of this application may include one first interlaced resource block (Interlaced Resource Block, IRB) and a first quantity of physical resource blocks (Physical Resource Block, PRB). The first IRB refers to a common IRB, that is, different PSFCH transmissions in a same RB set and a same slot occupy a same first IRB. Alternatively, a single PSFCH transmission resource occupies one second IRB, and the second IRB is a dedicated IRB, that is, PSFCH transmission resources corresponding to orthogonal PSCCH/PSSCH transmission resources are orthogonal.

If a resource occupied by single PSFCH transmission includes one first IRB and a first quantity of PRBs, when the first terminal needs to perform multiple times of PSFCH transmission in one RB set (that is, PSFCH transmissions are located in a same RB set), only one PSFCH transmission needs to occupy the first IRB and the first quantity of PRBs, and another PSFCH transmission only needs to occupy the first quantity of PRBs (that is, when the first terminal needs to perform multiple times of PSFCH transmission in one RB set, only one PSFCH transmission is performed on the first IRB). The first IRB that is not used in the other PSFCH transmission may be referred to as a dropped PRB (Dropped PRB) or a dropped common PRB (Dropped common PRB). The one-time PSFCH transmission (that is, a transmission that occupies a first IRB and a first quantity of PRBs) is PSFCH transmission with a lowest priority. Herein, with reference to FIG. 5A, this case is described below. It is assumed that one UE needs to perform three times of PSFCH transmission in one RB set, a transmission behavior of the UE may be: performing only one time of PSFCH transmission in a Common IRB, that is, it may be understood that only one time of PSFCH transmission occupies one Common IRB and one Dedicated PRB, and the other two times of transmission occupies only one Dedicated PRB.

In addition, if a resource occupied by a single PSFCH transmission includes a first IRB and a first quantity of PRBs, a specific PRB in a first IRB corresponding to one PSFCH transmission and a specific PRB in a first quantity of PRBs corresponding to another PSFCH transmission are located within 1 MHz (or represented as an absolute value of a difference between indexes corresponding to the foregoing two PRBs), and a resource corresponding to "a PSFCH transmission" (which does not include the specific PRB in the first IRB) may still meet a OCB requirement, "the specific PRB in the first IRB" may not be used as a resource for PSFCH transmission, that is, the PRB may be referred to as Dropped PRB or Dropped common PRB.

Actual Dropped common PRB may include one or both of the foregoing definitions.

In addition, if a dedicated PRB (dedicated PRB, which may specifically refer to a PRB in a first quantity of PRBs or a PRB in a second IRB) occupied by at least two times of PSFCH transmission of a same UE is located at 1 MHz, and PSFCH transmission at 1 MHz exceeds a constraint condition of (power spectral density, PSD), partial PSFCH transmission is discarded based on transmission index values (related to a priority) or based on a priority until the constraint condition of the PSD is met.

Herein, a case in which a resource occupied by a single PSFCH transmission includes one first IRB and a first quantity of PRBs is described with reference to FIG. 5B. Assuming that one UE needs to perform three times of PSFCH transmission in one RB set, a transmission behavior of the UE may be as follows: each time of PSFCH transmission occupies one Common IRB and one Dedicated PRB, that is, Common IRB corresponds to three times of PSFCH transmission.

In an optional implementation, the process of performing the PSFCH transmission in embodiments of this application includes: determining a power of the PSFCH transmission. The process of determining the power of the PSFCH transmission includes: calculating the transmitting power of the PSFCH transmission, and/or performing controlling on the quantity of times of transmitting and/or the transmitting power of the PSFCH. The following separately describes the foregoing steps in different cases.

I. In case of coverage (that is, in case of high-level parameter dl-P0-PSFCH)

1. A resource transmitted by the PSFCH includes a Dedicated IRB (second IRB).

Method 1:

(1) Calculating the transmitting power of a single transmission according to the PRB actually occupied by the PSFCH transmission:

First, the power on a single PRB is calculated according to the following formula:

$$P_{PSFCH,one\ PRB} = P_{O,PSFCH} + 10\log_{10}(2^\mu) + \alpha_{PSFCH} \cdot PL \ [dBm].$$

Then, the power of a single PSFCH transmission is calculated according to the following formula:

$$P_{PSFCH,one,i} = P_{PSFCH,one\ PRB} + 10\log_{10}(M^{PSFCH}_{OccupiedRB}) \quad [dBm] \quad = \quad P_{O,PSFCH} +$$

$10\log_{10}(2^\mu * M^{PSFCH}_{OccupiedRB}) + \alpha_{PSFCH} \cdot PL\ [dBm]$, where $M^{PSFCH}_{OccupiedRB}$ indicates a quantity of PRBs occupied by a single PSFCH transmission (actual), that is, powers calculated for different PSFCH transmission according to the quantity of PRBs actually occupied may be different.

(2) Power control adjustment process:

it is assumed that N is a quantity of scheduled PSFCH transmissions;
if N is less than or equal to a quantity threshold (quantity threshold), and a total power of N times of transmission is less than or equal to a power threshold (power threshold), the determined quantity of times of PSFCH transmission is N; or a total power of the N times of transmission is $\sum_{i=0}^{N} P_{PSFCH,one,i}$ , and a power of the i-th PSFCH transmission is $P_{PSFCH,one,i}$.

If N is less than or equal to a quantity threshold (quantity threshold), and the total power of the N times of transmission is greater than a power threshold (power threshold), N1 times of transmission is determined based on the transmission index value. In which, the total power of the N1 times of transmission is less than or equal to the power threshold, and the determined quantity of times of PSFCH transmission is a maximum value of all N1 that meet a condition, assuming to be N2, that is, the determined quantity times of PSFCH transmission is N2. On this basis, in the determined N2 times of PSFCH transmission, a power of the i-th PSFCH transmission is min {power threshold -10log10 (N2), $P_{PSFCH,one,i}$}, or a power of the i-th PSFCH transmission is min {power threshold -10log10 (a quantity of all PRBs occupied by the N2 times of PSFCH transmission) + 10log10 (a quantity of PRBs occupied by the i-th PSFCH transmission), $P_{PSFCH,one,i}$}.

If N is greater than a quantity threshold (quantity threshold), a quantity threshold of times PSFCH transmission is determined based on the transmission index value. If a total power of the determined quantity threshold of times PSFCH transmission is less than or equal to the power threshold, the determined quantity of times of PSFCH transmission is equal to the quantity threshold, and a power of the i-th PSFCH transmission is $P_{PSFCH,one,i}$. If the total power of the determined quantity threshold of times PSFCH transmission is greater than the power threshold, the N1 transmission is determined based on the transmission index value, where the total power of the N1 transmission is less than or equal to the power threshold. Further, the determined quantity of times of PSFCH transmission is a maximum value of all N1 that meet a condition, assuming to be N2, that is, the determined quantity of times of PSFCH transmission is N2. Based on this, in the determined N2 PSFCH transmission, a power of the i-th PSFCH transmission is min {power threshold -10log10 (N2), $P_{PSFCH,one,i}$}, or a power of the i-th PSFCH transmission is min {power threshold -10log10 (a quantity of all PRBs occupied by the N2 times of PSFCH transmission) + 10log10 (a quantity of PRBs occupied by the i-th PSFCH transmission),

$P_{PSFCH,one,i}$}.

Method 2:

(1) Calculating the transmitting power of a single transmission according to the reference PRB corresponding to a single PSFCH transmission:

First, the power on a single PRB is calculated according to the following formula:

$$P_{PSFCH,one\ PRB} = P_{O,PSFCH} + 10\log_{10}(2^\mu) + \alpha_{PSFCH} \cdot PL\ [dBm].$$

Then, the power of a single PSFCH transmission is calculated according to the following formula:

$$P_{PSFCH,one} = P_{O,PSFCH} + 10\log_{10}\left(2^\mu \cdot M_{ReferenceRB}^{PSFCH}\right) + \alpha_{PSFCH} \cdot PL \qquad [dBm], \quad \text{where}$$

$M_{ReferenceRB}^{PSFCH}$ indicates a quantity of reference PRBs corresponding to a single PSFCH transmission, or a quantity of reference PRBs corresponding to a single IRB in one RB set. That is, the power for all PSFCH transmission is equal.

(2) Power control adjustment process:
It is assumed that N is a quantity of scheduled PSFCH transmissions;

If N is less than or equal to a quantity threshold (quantity threshold), and the total power of the N times of transmission is less than or equal to a power threshold (power threshold), the determined quantity of times of PSFCH transmission is N, where the total power of the N times of transmission is $P_{PSFCH,one} + 10\log_{10}(N_{Tx,PSFCH})$, and power of each time of PSFCH transmission is $P_{PSFCH,one}$.

If N is less than or equal to a quantity threshold (quantity threshold), and the total power of the N times of transmission is greater than a power threshold (power threshold), N1 times of transmission is determined based on the transmission index value. In which, the total power of the N1 times of transmission is less than or equal to the power threshold, and the determined quantity of times of PSFCH transmission is a maximum value of all N1 that meet a condition, assuming to be N2, that is, the determined quantity of times of PSFCH transmission is N2. On this basis, in the determined N2 times of PSFCH transmission, a power transmitted by each PSFCH is min {power threshold -10log10 (N2), $P_{PSFCH,one}$}.

If N is greater than a quantity threshold (a quantity threshold), a quantity threshold times of PSFCH transmission is determined based on the transmission index value. In which, if a total power of the quantity threshold times of PSFCH transmission is less than or equal to a power threshold, the determined quantity of times of PSFCH transmission is a quantity threshold, and a power of the i-th PSFCH transmission is $P_{PSFCH,one}$. If the total power of the quantity threshold times of PSFCH transmission is greater than the power threshold, N1 transmission is determined based on the transmission index value, where the total power of the N1 transmission is less than or equal to the power threshold. Further, the determined quantity of times of PSFCH transmission is a maximum value of all N1 that meet a condition, assuming to be N2, that is, it is assumed that the determined quantity of times of PSFCH transmission is N2. Based on this, in the determined N2 PSFCH transmission, and a power of each PSFCH transmission is min {power threshold - 10log10 (N2), $P_{PSFCH,one}$}.

2. The resources used by the PSFCH transmission are as follows: Common IRB + Dedicated PRB

Method 1:

(1) Calculating the transmit power of a single transmission according to the PRB actually occupied by the PSFCH transmission:

First, the power on a single PRB is calculated.
The power on the Common PRB is calculated according to the following formula:

$P_{PSFCH,one}$ common PRB = $P_{O,PSFCH}$ + $10\log_{10}(2^{\mu})$ + $\alpha_{PSFCH} \cdot$ PL - $P_{offset}$ [dBm]; $P_{offset}$ represents a power offset value between Common PRB and Dedicated PRB;

The power on the Dedicated PRB is calculated according to the following formula:

$$P_{PSFCH,one\ dedicated\ PRB} = P_{O,PSFCH} + 10\log_{10}(2^{\mu}) + \alpha_{PSFCH} \cdot PL[dBm].$$

Then, the power of a single PSFCH transmission is determined as follows:

$$P_{PSFCH,one,i,\ common} = P_{O,PSFCH} + 10\log_{10}\left(2^{\mu} \cdot M^{PSFCH}_{OccupiedCommonRB}\right) + \alpha_{PSFCH} \cdot PL - P_{offset}[dBm];$$

$$P_{PSFCH,one,i,\ dedicated} = P_{O,PSFCH} + 10\log_{10}\left(2^{\mu} \cdot M^{PSFCH}_{dedicatedPRB}\right) + \alpha_{PSFCH} \cdot PL[dBm];$$

$$P_{PSFCH,one,i} = 10\log_{10}\left(10^{\frac{P_{PSFCH,one,i,\ common}}{10}} + 10^{\frac{P_{PSFCH,one,i,\ dedicated}}{10}}\right)[dBm].$$

In which, $P_{PSFCH,one,i,\ common}$ represents a power of a single PSFCH transmission on the Common IRB; $P_{PSFCH,one,i,\ dedicated}$ represents a power of a single PSFCH transmission on the Dedicated PRB; $M^{PSFCH}_{OccupiedCommonRB}$ represents a quantity of Common PRB occupied by a single PSFCH transmission, and does not include the foregoing defined Dropped common PRB. If all Common PRBs are Dropped common PRBs, that is, $M^{PSFCH}_{OccupiedCommonRB}$ is equal to 0, it indicates $P_{PSFCH,one,i,\ common}$ being 1dBm or 0W (watt); $M^{PSFCH}_{dedicatedPRB}$ represents a quantity of Dedicated PRB occupied by a single PSFCH transmission.

(2) Power control adjustment process:

It is assumed that N is a quantity of scheduled PSFCH transmissions.

If N is less than or equal to a quantity threshold (quantity threshold), and a total power of N times of transmission is less than or equal to a power threshold (power threshold), the determined quantity of times of PSFCH transmission is N.

The total power of the N times of transmission is $\sum_{i=0}^{N} P_{PSFCH,one,\ i}$, and a power of the i-th PSFCH transmission is $P_{PSFCH,one,i}$.

If N is less than or equal to a quantity threshold (quantity threshold), and the total power of the N times of transmission is greater than a power threshold (power threshold), N1 times of transmission is determined based on the transmission index value. In which, the total power of the N1 times of transmission is less than or equal to the power threshold, and the determined quantity of times of PSFCH transmission is a maximum value of all N1 that meet a condition, assuming to be N2, that is, the determined quantity of times of PSFCH transmission is N2. On this basis, in the determined N2 times of PSFCH transmission, a power of the i-th time PSFCH transmission is min {power threshold -10log10 (N2), $P_{PSFCH,one,i}$}. Alternatively, the power of the i-th time PSFCH transmission is calculated as follows.

(1) a power corresponding to the power threshold is allocated to each PRB (which may include or not include Dropped common PRB), where power corresponding to different Common PRBs is equal, power corresponding to different Dedicated PRBs is equal, and an offset value of powers corresponding to Common PRB and Dedicated PRB is Poffset (power of Dedicated PRB is higher than power of Common PRB);

(2) Based on the power corresponding to each Common PRB and the quantity of Common PRB, the power on the Common PRB is calculated as P1 [dBm]; and based on the power corresponding to each Dedicated PRB and the quantity of Dedicated PRB, the power of the Dedicated PRB is calculated as P2 [dBm], then

$$P3 = 10\log_{10}\left(10^{\frac{P1}{10}} + 10^{\frac{P2}{10}}\right) [dBm].$$

(3) The power of the i-th PSFCH transmission is min {P3, $P_{PSFCH,one,i}$}.

If N is greater than a quantity threshold (quantity threshold), a quantity threshold times of PSFCH transmission is determined based on the transmission index value. In which, if the total power of the quantity threshold times of PSFCH transmission is less than or equal to a power threshold, the determined quantity of times of PSFCH transmission is a quantity threshold, and a power of the i-th PSFCH transmission is $P_{PSFCH,one,i}$. If the total power of the quantity threshold times of PSFCH transmission is greater than the power threshold, the N1 transmission is determined based on the transmission index value, where the total power of the N1 transmission is less than or equal to the power threshold. Further, the determined quantity of times of PSFCH transmission is a maximum value of all N1 that meet a condition, assuming to be N2, that is, the determined quantity of times of PSFCH transmission is N2. Based on this, in the determined N2 transmission, a power of the i-th PSFCH transmission is min {power threshold -10log10 (N2), $P_{PSFCH,one,i}$}, or the power of the i-th PSFCH transmission is calculated as follows.

1) a power corresponding to the power threshold is allocated to each PRB, where the power corresponding to different Common PRBs is equal, the power corresponding to different Dedicated PRBs is equal, and an offset value of powers corresponding to Common PRB and Dedicated PRB is Poffset.

2) Based on the power corresponding to each Common PRB and the quantity of Common PRB, the power on the Common PRB is calculated as P1 [dBm]; and based on the power corresponding to each Dedicated PRB and the quantity of Dedicated PRB, the power of the Dedicated PRB is calculated as P2 [dBm], then

$$P3 = 10\log_{10}\left(10^{\frac{P1}{10}} + 10^{\frac{P2}{10}}\right) \text{ [dBm].}$$

3) The power of the i-th PSFCH transmission is min {P3, $P_{PSFCH,one,i}$}.

Method 2:

(1) Calculating the transmitting power of a single transmission according to a quantity of reference PRBs corresponding to the Common IRB:

First, the power on a single PRB is calculated.
The power on the Common PRB is calculated according to the following formula:
$P_{PSFCH,\text{one common PRB}} = P_{O,PSFCH} + 10\log_{10}(2^{\mu}) + \alpha_{PSFCH} \cdot PL - P_{offset}$ [dBm], where $P_{offset}$ represents a power offset value between Common PRB and Dedicated PRB.
The power on the Dedicated PRB is calculated according to the following formula:

$$P_{PSFCH,\text{one dedicated PRB}} = P_{O,PSFCH} + 10\log_{10}(2^{\mu}) + \alpha_{PSFCH} \cdot PL\,[dBm].$$

Then, the power of a single PSFCH transmission is determined as follows:

$$P_{PSFCH,one,i,\text{ common}} = P_{O,PSFCH} + 10\log_{10}\big(2^{\mu} \cdot \ (M_{RefCommonRB}^{PSFCH} -$$

$$M_{DroppedCommonRB}^{PSFCH}\big) + \alpha_{PSFCH} \cdot PL - P_{offset}[dBm]$$

$$P_{PSFCH,one,i,\text{ dedicated}} = P_{O,PSFCH} + 10\log_{10}\big(2^{\mu} \cdot M_{dedicatedPRB}^{PSFCH}\big) + \alpha_{PSFCH} \cdot PL \ [dBm]$$

$$P_{PSFCH,one,i} = 10\log_{10}(10^{\frac{P_{PSFCH,one,i,\text{ common}}}{10}} + 10^{\frac{P_{PSFCH,one,i,\text{ dedicated}}}{10}})[dBm].$$

In which, $P_{PSFCH,one,i, \text{ common}}$ represents a power of a single PSFCH transmission on the Common IRB;
[0268 $P_{PSFCH,one,i, \text{ dedicated}}$ represents the power of a single PSFCH transmission on the Dedicated PRB;

$M_{RefCommonRB}^{PSFCH}$ represents a reference value of the quantity of PRBs corresponding to the Common IRB occupied by a single PSFCH transmission;

$M_{DroppedCommonRB}^{PSFCH}$ represents the Dropped common PRB defined above;

$M_{dedicatedPRB}^{PSFCH}$ represents a quantity of Dedicated PRB occupied by a single PSFCH transmission.

(2) Power control adjustment process:

It is assumed that N is a quantity of scheduled PSFCH transmissions.

If N is less than or equal to a quantity threshold (quantity threshold), and a total power of N times of transmission is less than or equal to a power threshold (power threshold), the determined quantity of times of PSFCH transmission is N.

The total power of the N times of transmission is $\sum_{i=0}^{N} P_{PSFCH,one,i}$ , and a power of the i-th PSFCH transmission is $P_{PSFCH,one,i}$.

If N is less than or equal to a quantity threshold (quantity threshold), and the total power of the N times of transmission is greater than a power threshold (power threshold), N1 times of transmission is determined based on the transmission index value. In which, the total power of the N1 times of transmission is less than or equal to the power threshold, and the determined quantity of times of PSFCH transmission is a maximum value of all N1 that meet a condition, assuming to be N2, that is, the determined quantity of times of PSFCH transmission is N2. On this basis, in the determined N2 PSFCH transmissions, the power of the i-th PSFCH transmission is min {power threshold -10log10(N2), $P_{PSFCH,one,i}$}, or the power of the i-th PSFCH transmission is calculated as follows.

1) a power corresponding to the power threshold is allocated to each PRB, where the power corresponding to different Common PRBs is equal (a quantity of PRBs corresponding to Common PRB is $M_{RefCommonRB}^{PSFCH} - M_{DroppedCommonRB}^{PSFCH}$ ), the power corresponding to different Dedicated PRB is equal, and an offset value of powers corresponding to Common PRB and Dedicated PRB is Poffset.

2) Based on the power corresponding to each Common PRB and the quantity of Common PRB, the power on the Common PRB is calculated as P1 [dBm]; and based on the power corresponding to each Dedicated PRB and the quantity of Dedicated PRB, the power of the Dedicated PRB is calculate as P2 [dBm], then

$$P3=10\log_{10}(10^{\frac{P1}{10}} + 10^{\frac{P2}{10}}) \text{ [dBm]}.$$

3) The power of the i-th PSFCH transmission is min {P3, $P_{PSFCH,one,i}$}.

If N is greater than a quantity threshold (quantity threshold), a quantity threshold times of PSFCH transmission is determined based on the transmission index value. In which, if a total power of the quantity threshold times of PSFCH transmission is less than or equal to a power threshold value, the determined quantity of times of PSFCH transmission is a quantity threshold, and a power of the i-th PSFCH transmission is $P_{PSFCH,one,i}$. If the total power of the quantity threshold times of PSFCH transmission is greater than the power threshold, N1 transmission is determined based on the transmission index value, where the total power of the N1 transmission is less than or equal to the power threshold. Further, the determined quantity of times of PSFCH transmission is a maximum value of all N1 that meet a condition, assuming to be N2, that is, the determined quantity of times of PSFCH transmission is N2. Based on this, in the determined N2 PSFCH transmission, a power of the i-th PSFCH transmission is min {power threshold -10log10 (N2), $P_{PSFCH,one,i}$}, or the power of the i-th PSFCH transmission is calculated as follows.

1) a power corresponding to the power threshold is allocated to each PRB, where the power corresponding to different Common PRBs is equal (a quantity of PRBs corresponding to Common PRB is $M_{RefCommonRB}^{PSFCH} - M_{DroppedCommonRB}^{PSFCH}$ ), the power corresponding to different Dedicated PRBs is equal, and an offset value of powers corresponding to Common PRB and Dedicated PRB is Poffset.

2) Based on the power corresponding to each Common PRB and the quantity of Common PRB, the power on the Common PRB is calculated as P1 [dBm]; and based on the power corresponding to each Dedicated PRB and the quantity of Dedicated PRB, the power of the Dedicated PRB is calculated as P2 [dBm], then

$$P3= 10\log_{10}(10^{\frac{P1}{10}} + 10^{\frac{P2}{10}}) \text{ [dBm]}.$$

3) The power of the i-th PSFCH transmission is min {P3, $P_{PSFCH,one,i}$}.

Method 3:

(1) Calculating the transmitting power of a single transmission according to the reference PRB corresponding to a single PSFCH transmission.

First, the formula for calculating a theoretical power on a single PRB is as follows (Common PRB and Dedicated PRB are not distinguished herein):

$$P_{PSFCH,one\ PRB} = P_{O,PSFCH} + 10\log_{10}(2^\mu) + \alpha_{PSFCH} \cdot PL\ \ [dBm].$$

Then, a formula for calculating a power of a single PSFCH transmission is as follows:

$$P_{PSFCH,one} = P_{O,PSFCH} + 10\log_{10}\left(2^\mu \cdot M_{ReferenceRB}^{PSFCH}\right) + \alpha_{PSFCH} \cdot PL\ \ \ \ [dBm]\ \ ,\ \text{where}$$

$M_{ReferenceRB}^{PSFCH}$ indicates a quantity of reference PRBs corresponding to a single PSFCH transmission, or a quantity of reference PRBs corresponding to a single IRB in one RB set + a quantity of Dedicated PRB occupied by a single PSFCH transmission.

(2) Power control adjustment process:

It is assumed that N is a quantity of scheduled PSFCH transmissions;
if N is less than or equal to a quantity threshold (quantity threshold), and the total power of the N times of transmission is less than or equal to a power threshold (power threshold), the determined quantity of times of PSFCH transmission is N, where the total power of the N times of transmission is $P_{PSFCH,one}$ + 10 $log_{10}$ $(N_{Tx,PSFCH})$ , and a power of each time of PSFCH transmission is $P_{PSFCH,one}$;
if N is less than or equal to a quantity threshold (a quantity threshold), and the total power of the N times of transmission is greater than a power threshold (a power threshold), N1 times of transmission is determined based on the transmission index value. In which, the total power of the N1 times of transmission is less than or equal to a power threshold, and the determined quantity of times of PSFCH transmission is a maximum value of all N1 that meet a condition, assuming to be N2, that is, the determined quantity of times of PSFCH transmission is N2. On this basis, in the determined N2 times of PSFCH transmission, a power of each PSFCH transmission is min {power threshold -10log10 (N2), $P_{PSFCH,one}$}.

If N is greater than a quantity threshold (quantity threshold), a quantity threshold times of PSFCH transmission is determined based on the transmission index value. If a total power of the quantity threshold times of PSFCH transmission is less than or equal to a power threshold value, the determined quantity of times of PSFCH transmission is a quantity threshold, and a power of each PSFCH transmission is $P_{PSFCH,one}$. If the total power of the quantity threshold times of PSFCH transmission is greater than the power threshold, N1 transmission is determined based on the transmission index value, where the total power of the N1 transmission is less than or equal to the power threshold. Further, the determined quantity of times of PSFCH transmission is a maximum value of all N1 that meets a condition, assuming to be N2, that is, the determined quantity of times of PSFCH transmission is N2. Based on this, in the determined N2 PSFCH transmission, and a power of each PSFCH transmission is min {power threshold -10log10 (N2), $P_{PSFCH,one}$}.

If the resources transmitted by the PSFCH include the Dedicated IRB, the calculated PSFCH transmission power is evenly allocated to all PRBs.

A resource used for PSFCH transmission is Common IRB + Dedicated PRB, and then the calculated PSFCH transmission power is allocated to each PRB. In which, powers of different RPBs (that is, Common PRB) in each Common IRB are equal, powers of different Dedicated PRBs are equal, and a power difference between a Common PRB and a Dedicated PRB is $P_{offset}$ (a power of Common PRB is lower than a power of Dedicated PRB).

In all the foregoing formulas, $P_{O,PSFCH}$, $\mu$, $\alpha_{PSFCH}$ and PL are parameters configured by a higher layer. When $\alpha_{PSFCH}$ is not configured, $\alpha_{PSFCH}$ is 1. For the definition and configuration of related parameters, one may refer to 3GPP TS 38.213.

II. Case of out-of-coverage (no high-level parameter dl-P0-PSFCH)

The UE (the first terminal) determines a quantity N of times of transmission, where N is greater than or equal to 1, or N is greater than or equal to 1 and N is less than or equal to a quantity threshold. Specifically:

1. If a resource for the PSFCH transmission includes the Dedicated IRB,

Manner 1: a power of any one PSFCH transmission is $P_{CMAX}$ - $10\log_{10}$ (N) [dBm];
Manner 2: a power of the i-th PSFCH transmission is: a power threshold -10log10 ( a quantity of all PRBs occupied by the N PSFCH transmission) + $10\log_{10}$ (a quantity of PRBs occupied by the i-th PSFCH transmission).

2. If a resource for the PSFCH transmission includes the Common IRB+Dedicated PRB,

Manner 1: a power of any one PSFCH transmission is $P_{CMAX}$ - $10\log_{10}$ (N) [dBm].
Manner 2: A process of determining the power of the i-th PSFCH transmission includes:

1) a power corresponding to the power threshold is allocated to each PRB, where the power corresponding to different Common PRBs is equal (a quantity of PRBs corresponding to Common PRB is

$$M_{RefCommonRB}^{PSFCH} - M_{DroppedCommonRB}^{PSFCH}$$, or a quantity of PRBs corresponding to Common PRB is a quantity of actually occupied common PRB (that is, does not include Dropped common PRB)), power corresponding to different Dedicated PRB is equal, and an offset value of powers corresponding to Common PRB and Dedicated PRB is Poffset.

2) Based on the power corresponding to each Common PRB and the quantity of Common PRB, the power on the Common PRB is calculated as P1 [dBm]; and based on the power corresponding to each Dedicated PRB and the quantity of Dedicated PRB, the power of the Dedicated PRB is calculated as P2 [dBm].

3) the power of the i-th PSFCH transmission is determined as $P= 10\log_{10}(10^{\frac{P1}{10}} + 10^{\frac{P2}{10}})$ [dBm].

Manner 3: A process of determining the power of the i-th PSFCH transmission includes:

1) a power corresponding to the power threshold is allocated to each PRB, where the power corresponding to different Common PRBs is equal (a quantity of PRBs corresponding to the Common PRB is a reference value of a quantity of PRBs corresponding to a single IRB, or a quantity of PRBs corresponding to the Common PRB is a reference value of a quantity of PRBs corresponding to a single IRB), the power corresponding to different Dedicated PRB is equal, and an offset value of powers corresponding to the Common PRB and the Dedicated PRB is Poffset;
2) the power of the Common PRB is calculated as P1 based on the power corresponding to each Common PRB and the quantity of Common PRB, and the power of the Dedicated PRB is calculated as P2 based on the power corresponding to each Dedicated PRB and the quantity of Dedicated PRB.

3) the power of the i-th PSFCH transmission is determined as $P=10\log_{10}(10^{\frac{P1}{10}} + 10^{\frac{P2}{10}})$.

In the sidelink transmission method according to embodiments of this application, the RB set is indicated by designing coordination request information and content carried in the coordination request information. A plurality of PSFCH transmission resources are determined according to a conflicting resource or an SCI related to the conflicting resource, and a power/quantity of PSFCH transmission is controlled, so that the sidelink transmission method can be applied to a definition of a modified HARQ RTT. In this way, the IUC can be applied to the SL-U whose structure and characteristics change.

As shown in FIG. 2, an embodiment of this application further provides a sidelink transmission method. The method is applied to a second terminal and includes step 202. Step 202 includes at least one of the following:

receiving first type of coordination information transmitted by a first terminal; herein, before receiving the first coordination information, the second terminal has transmitted the PSSCH to the first terminal; or

receiving a PSFCH transmitted by the first terminal, where the PSFCH transmission performed by the first terminal includes at least one of the following:

a first type of PSFCH transmission, used to carry HARQ-ACK information;
a second type of PSFCH transmission, used to carry a second type of coordination information, where the second type of coordination information is conflict information; or
a third type of PSFCH transmission, used to avoid interruption of COT.

In the sidelink transmission method according to embodiments of this application, the second terminal receives the first type of coordination information transmitted by the first terminal; and/or receives a PSFCH transmitted by the first terminal. The PSFCH transmission includes at least one of the following: a first type of PSFCH transmission, used to carry HARQ-ACK information; a second type of PSFCH transmission, used to carry second type of coordination information, where the second type of coordination information is conflict information; or a third type of PSFCH transmission, used to avoid interruption of COT. In this way, the second terminal can select a transmitting resource based on the first type of coordination information transmitted by the first terminal and/or information carried in PSFCH transmission, so that the transmitting resource selected by the second terminal can be applied to the first terminal and/or does not conflict with a resource selected by another terminal, thereby improving reliability of system data transmission.

Further, in an optional implementation manner, the method further includes:
transmitting coordination request information to the first terminal, where the coordination request information includes at least one of the following:

a quantity of resource block sets RB set, used to indicate a quantity of RB set occupied by PSCCH and/or PSSCH transmission;
first RB set information, used to indicate a candidate RB set available for PSCCH and/or PSSCH transmission;
second RB set information, used to indicate an RB set on which the second terminal detects a C-LBT failure;
a first quantity of subchannels, used to indicate a quantity of subchannels occupied by PSCCH and/or PSSCH transmission in all occupied RB set;
a second quantity of subchannels, used to indicate a quantity of subchannels occupied by PSCCH and/or PSSCH transmission in one RB set;
a resource reservation period;
a starting time of the resource selection window;
an ending time of the resource selection window; or
a resource set type, used to indicate a type of a resource set that is expected to be provided by the first terminal, where the type of the resource set includes a preferred resource set and/or a non-preferred resource set.

In another optional implementation, the first type of coordination information includes at least one of the following:

a resource combination information set, used to indicate time-frequency information of a resource corresponding to at least one resource combination provided by the first terminal;
a reference slot location, used to indicate a location of a slot in which a first resource in a first resource combination in the at least one resource combination is located;
a first resource location, used to indicate an offset value of a slot in which a first resource in each resource combination except the first resource combination in the at least one resource combination is located, relative to the reference slot;
a resource set type, used to indicate a type of a resource set provided by the first terminal, where the type of the resource set includes a preferred resource set (Preferred resource set) and/or a non-preferred resource set (Non-preferred resource set);
a lowest sub-channel indication, used to indicate a sub-channel with a smallest index corresponding to a first resource in each of the at least one resource combination that is provided by the first terminal; or
a lowest RB set indication, used to indicate an RB set with a smallest index corresponding to a first resource in each of the at least one resource combination provided by the first terminal.

Specifically, each resource combination information in the resource combination information set includes at least one of the following:

a time domain resource indication value TRIV, used to indicate time domain information corresponding to a resource in a resource combination;
a first frequency domain resource indication value FRIV, used to indicate sub-channel information corresponding to a resource in a resource combination; or

a second FRIV, used to indicate RB set information corresponding to a resource in the resource combination.

An embodiment of this application further provides a sidelink transmission apparatus, applied to a first terminal. As shown in FIG. 6, the apparatus includes:
an execution module 601, where the execution module is configured to perform at least one of:

performing first type of coordination information transmission; or
performing PSFCH transmission; where the PSFCH transmission includes at least one of the following:

first type of PSFCH transmission, used to carry HARQ-ACK information;
second type of PSFCH transmission, used to carry second type of coordination information, where the second type coordination information is conflict information; or
third type of PSFCH transmission, used to avoid interruption of COT.

Further, the apparatus further includes:
a receiving module, configured to receive coordination request information transmitted by a second terminal. The coordination request information includes at least one of the following:

a quantity of resource block sets RB set, used to indicate a quantity of RB set occupied by a physical sidelink control channel PSCCH and/or a physical sidelink shared channel PSSCH transmission;
first RB set information, used to indicate a candidate RB set available for PSCCH and/or PSSCH transmission;
second RB set information, used to indicate an RB set on which the second terminal detects a C-LBT failure;
a first quantity of subchannels, used to indicate a quantity of subchannels occupied by PSCCH and/or PSSCH transmission in all occupied RB set;
a resource reservation period;
a starting time of the resource selection window;
an ending time of the resource selection window; or
a resource set type, used to indicate a type of a resource set that is expected to be provided by the first terminal, where the type of the resource set includes a preferred resource set and/or a non-preferred resource set.

Optionally, the first type of coordination information includes at least one of the following:

a resource combination information set, used to indicate time-frequency information of a resource corresponding to at least one resource combination provided by the first terminal;
a reference slot location, used to indicate a location of a slot in which a first resource in a first resource combination in the at least one resource combination is located;
a first resource location indication, used to indicate an offset value of a slot in which a first resource in each resource combination except the first resource combination in the at least one resource combination is located, relative to the reference slot;
a resource set type, used to indicate a type of a resource set provided by the first terminal, where the type of the resource set includes a preferred resource set and/or a non-preferred resource set;
a lowest sub-channel indication, used to indicate a sub-channel with a smallest index corresponding to a first resource in each of the at least one resource combination that is provided by the first terminal; or
a lowest RB set indication, used to indicate an RB set with a smallest index corresponding to a first resource in each of the at least one resource combination provided by the first terminal.

Specifically, each resource combination information in the resource combination information set includes at least one of the following:

a time domain resource indication value TRIV, used to indicate time domain information corresponding to a resource in a resource combination;
a first frequency domain resource indication value FRIV, used to indicate sub-channel information corresponding to a resource in a resource combination; or
a second FRIV, used to indicate RB set information corresponding to a resource in the resource combination.

Optionally, the apparatus further includes:

a first determining module, configured to determine, according to a PSCCH and/or PSSCH transmission resource that is reserved by the second terminal and for which a resource conflict occurs, one or more resources used for the second type of PSFCH transmission; or

a second determining module, configured to determine, according to the time-frequency resource in which sidelink control information SCI transmitted by the second terminal is located, one or more resources used for the second type of PSFCH transmission, where the first terminal detects that a resource conflict occurs for the PSCCH and/or PSSCH transmission resources indicated by the SCI.

Optionally, the determined one or more resources used for the second type of PSFCH transmission meet at least one of the following:

a time domain interval between slots in which any two adjacent resources used for second type of PSFCH transmission are located is a PSFCH resource period;

a first slot in which any resource used for the second type of PSFCH transmission is located is located before a second slot in which a PSCCH and/or PSSCH transmission resource that is reserved by the second terminal and for which a resource conflict occurs is located, and a quantity of slots between any one of the first slots and the second slot is greater than or equal to a first value; or

any one of the first slots is located after a third slot in which the SCI is located, and a quantity of slots between any one of the first slots and the third slot is greater than or equal to a second value.

Optionally, the apparatus further includes a second determining module, and the second determining module is configured to:

determine first PSFCH transmission executable by the first terminal, according to at least one of a transmission index value of at least one PSFCH transmission that is to be executed by the first terminal, a power of the at least one PSFCH transmission, a quantity of the at least one PSFCH transmission, a power threshold, and a quantity threshold, where the transmission index value is related to a type of PSFCH transmission and/or a priority of PSFCH transmission, and the first PSFCH transmission meets at least one of the following:

a total power of the first PSFCH transmission is less than or equal to the power threshold;

a quantity of the first PSFCH transmission is less than or equal to the quantity threshold; or

a quantity of the first PSFCH transmission is greater than or equal to a third value.

Optionally, an index value of the first type of PSFCH transmission is less than an index value of the second type of PSFCH transmission, and an index value of the second type of PSFCH transmission is less than an index value of the third type of PSFCH transmission.

It should be noted herein that the foregoing sidelink transmission apparatus provided in embodiments of this application can implement all method steps described in the foregoing sidelink transmission method embodiment applied to the first terminal, and a same technical effect can be achieved. Herein, a part and beneficial effect that are the same as those in the method embodiment are not described in detail.

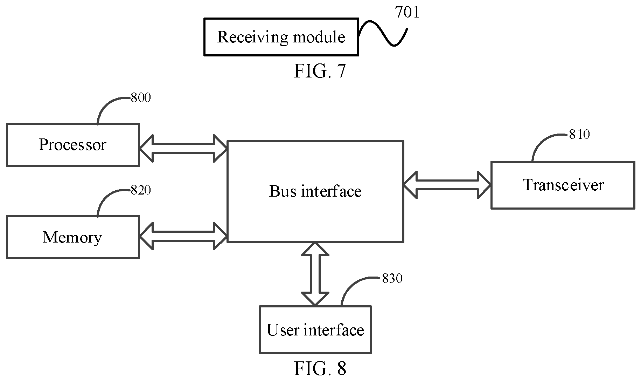

An embodiment of this application further provides a sidelink transmission apparatus, applied to a second terminal. As shown in FIG. 7, the apparatus includes a receiving module 701, and the receiving module 701 is configured to perform at least one of:

receiving first type of coordination information transmitted by a first terminal; or

receiving a PSFCH transmitted by the first terminal, where the PSFCH transmission performed by the first terminal includes at least one of the following:

first type of PSFCH transmission, used to carry HARQ-ACK information;

second type of PSFCH transmission, used to carry second type of coordination information, where the second type of coordination information is conflict information; or

third type of PSFCH transmission, used to avoid interruption of COT.

Further, the apparatus further includes:

a transmitting module, configured to transmit coordination request information to a first terminal, where the coordination request information includes at least one of the following:

a quantity of resource block sets RB set, used to indicate a quantity of RB set occupied by PSCCH and/or PSSCH transmission;

first RB set information, used to indicate a candidate RB set available for PSCCH and/or PSSCH transmission;

second RB set information, used to indicate an RB set on which the second terminal detects a C-LBT failure;

a first quantity of subchannels, used to indicate a quantity of subchannels occupied by PSCCH and/or PSSCH transmission in all occupied RB set;

a resource reservation period;

a starting time of the resource selection window;

an ending time of the resource selection window; or

a resource set type, used to indicate a type of a resource set that is expected to be provided by the first terminal, where the type of the resource set includes a preferred resource set and/or a non-preferred resource set.

Optionally, the first type of coordination information includes at least one of the following:

a resource combination information set, used to indicate time-frequency information of a resource corresponding to at least one resource combination provided by the first terminal;

a reference slot location, used to indicate a location of a slot in which a first resource of a first resource combination in the at least one resource combination is located;

a first resource location indication, used to indicate an offset value of a slot in which a first resource in each resource combination except the first resource combination in the at least one resource combination is located, relative to the reference slot;

a resource set type, used to indicate a type of a resource set provided by the first terminal, where the type of the resource set includes a preferred resource set (Preferred resource set) and/or a non-preferred resource set (Non-preferred resource set);

a lowest sub-channel indicator, used to indicate a sub-channel with a smallest index corresponding to a first resource in each of the at least one resource combination that is provided by the first terminal; or

a lowest RB set indication, used to indicate an RB set with a smallest index corresponding to a first resource in each of the at least one resource combination provided by the first terminal.

Specifically, each resource combination information in the resource combination information set includes at least one of the following:

a time domain resource indication value TRIV, used to indicate time domain information corresponding to a resource in a resource combination;

a first frequency domain resource indication value FRIV, used to indicate sub-channel information corresponding to a resource in a resource combination; or

a second FRIV, used to indicate RB set information corresponding to a resource in the resource combination.

It should be noted herein that the foregoing sidelink transmission apparatus provided in embodiments of this application can implement all method steps described in the foregoing sidelink transmission method embodiments applied to the second terminal, and a same technical effect can be achieved. Herein, a part and beneficial effect that are the same as those in the method embodiments are not described in detail.

An embodiment of this application further provides a terminal, including a transceiver 810, a processor 800, a memory 820, and a program or an instruction that is stored in the memory 820 and that is runnable on the processor 800. The processor 800 implements the foregoing sidelink transmission method applied to the first terminal or the foregoing sidelink transmission method applied to the second terminal when executing the program or the instruction.

The transceiver 810 is configured to receive and transmit data under control of the processor 800.

In FIG. 8, the bus architecture may include any quantity of interconnected buses and bridges. Specifically, one or more processors represented by the processor 800 and various circuit links of the memory represented by the memory 820 are linked together. The bus architecture may further link various other circuits such as a peripheral device, a voltage regulator, and a power management circuit together. These are all well-known in the art, and therefore are not further described in this specification. The bus interface provides interfaces. The transceiver 810 may be multiple elements, that is, includes a transmitter and a receiver, and provides a unit configured to communicate with various other apparatuses on a transmission medium. For different terminals, the user interface 830 may further be an interface that can be externally connected to a device that requires an internal connection. The connected device includes but is not limited to a keypad, a display, a speaker, a microphone, a joystick, and the like.

The processor 800 is responsible for managing a bus architecture and common processing, and the memory 820 may store data used when the processor 1300 performs an operation.

A person skilled in the art may understand that all or some of the steps of the foregoing embodiments may be implemented by hardware, or may be implemented by a computer program instructing related hardware, and the computer program includes an instruction for executing some or all of the steps of the foregoing methods. In addition, the computer program may be stored in a readable storage medium, and the storage medium may be any form of storage medium.

In addition, an embodiment of this application further provides a readable storage medium, where a program is stored in the readable storage medium. When the program is executed by the processor, processes in the foregoing sidelink transmission method embodiment can be implemented, and a same technical effect can be achieved. To avoid repetition, details are not described herein again. The readable storage medium includes a Read-Only Memory (Read-Only Memory, ROM for short), a Random Access Memory (Random Access Memory, RAM for short), a magnetic disk, or an optical disc.

In addition, it should be noted that, in the apparatus and method in this application, apparently, each component or step may be decomposed and/or recombined. These decomposition and/or recombination shall be considered as equivalent solutions of this application. In addition, the steps for performing the foregoing series of processing may be performed in an illustration sequence or in a time sequence, but do not necessarily need to be performed in a time sequence, and some steps may be performed in parallel or independently of each other. A person of ordinary skill in the art can understand that all or any step or component of the method and apparatus in this application may be implemented in any computing apparatus (including a processor, a storage medium, or the like) or a network of a computing apparatus by using hardware, firmware, software, or a combination thereof. This can be implemented by a person of ordinary skill in the art by using a basic programming skill after reading the description of this application.

Finally, it should be noted that in this specification, relationship terms such as the first and the second are merely used to distinguish one entity or operation from another, and do not necessarily require or imply that any such actual relationship or sequence exists between these entities or operations. In addition, the term "includes", "comprises", or any other variant thereof is intended to cover non-exclusive inclusion, so that a process, method, article, or terminal device that includes a series of elements includes not only those elements but also other elements that are not explicitly listed, or includes elements inherent in such a process, method, article, or device. In the absence of more restrictions, an element defined by the statement "includes a..." does not exclude another same element in a process, method, article, or device that includes the element.

The foregoing are optional implementation manners of this application. It should be noted that a person of ordinary skill in the art may make some improvements and modifications without departing from the principles described in this application, and these improvements and modifications shall be considered to fall within the protection scope of this application.

**Claims**

1. A sidelink transmission method, applied to a first terminal, comprising at least one of the following:

    performing first type of coordination information transmission; or
    performing physical sidelink feedback channel PSFCH transmission, wherein the PSFCH transmission comprises at least one of the following:

        first type of PSFCH transmission, used to carry hybrid automatic repeat request acknowledgement HARQ-ACK information;
        second type of PSFCH transmission, used to carry second type of coordination information, wherein the second type of coordination information is conflict information; or
        third type of PSFCH transmission, used to avoid interruption of channel occupancy time COT.

2. The method according to claim 1, further comprising:
    receiving coordination request information transmitted by a second terminal, wherein the coordination request information comprises at least one of the following:

        a number of resource block sets RB sets, used to indicate a number of RB sets occupied for transmission of a physical sidelink control channel PSCCH and/or a physical sidelink shared channel PSSCH;
        first RB set information, used to indicate a candidate RB set available for PSCCH and/or PSSCH transmission;
        second RB set information, used to indicate an RB set on which the second terminal detects a consistent listen-before-talk C-LBT failure;
        a first quantity of subchannels, used to indicate a quantity of subchannels occupied by PSCCH and/or PSSCH transmission in all occupied RB sets;
        a resource reservation period;
        a starting time of a resource selection window;
        an ending time of a resource selection window; or

a resource set type, used to indicate a type of a resource set that is expected to be provided by the first terminal, wherein the type of the resource set comprises a preferred resource set and/or a non-preferred resource set.

3. The method according to claim 1 or 2, wherein the first type of coordination information comprises at least one of:

a resource combination information set, used to indicate time-frequency information of a resource corresponding to at least one resource combination;
a reference slot location, used to indicate a location of a slot in which a first resource of a first resource combination in the at least one resource combination is located;
a first resource location, used to indicate an offset value of a slot in which a first resource in each resource combination except the first resource combination in the at least one resource combination is located, relative to the reference slot;
a resource set type, used to indicate a type of a resource set provided by the first terminal, wherein the type of the resource set comprises a preferred resource set and/or a non-preferred set;
lowest sub-channel indication, used to indicate a sub-channel with a smallest index corresponding to a first resource in each of the at least one resource combination that is provided by the first terminal; or
lowest RB set indication, used to indicate an RB set with a smallest index corresponding to a first resource in each of the at least one resource combination provided by the first terminal.

4. The method according to claim 3, wherein resource combination information in the resource combination information set comprises at least one of the following:

a time domain resource indication value TRIV, used to indicate time domain information corresponding to a resource in a resource combination;
a first frequency domain resource indication value FRIV, used to indicate sub-channel information corresponding to a resource in a resource combination; or
a second FRIV, used to indicate RB set information corresponding to a resource in the resource combination.

5. The method according to claim 1, further comprising:

determining, according to PSCCH and/or PSSCH transmission resources that are reserved by the second terminal and for which a resource conflict occurs, one or more resources used for second type of PSFCH transmission; or
determining, according to a time-frequency resource in which sidelink control information SCI transmitted by the second terminal is located, one or more resources used for second type of PSFCH transmission, wherein the first terminal detects that a resource conflict occurs for a PSCCH and/or PSSCH transmission resource indicated by the SCI.

6. The method according to claim 5, wherein the determined one or more resources for second type of PSFCH transmission meet at least one of the following:

a time domain interval between slots in which any two adjacent resources used for second type of PSFCH transmission are located is a PSFCH resource period;
a first slot in which any resource used for second type of PSFCH transmission is located is located before a second slot in which PSCCH and/or PSSCH transmission resources that are reserved by the second terminal and for which a resource conflict occurs are located, and a quantity of slots between any of the first slot and the second slot is greater than or equal to a first value; or
any of the first slot is located after a third slot in which the SCI is located, and a quantity of slots between any of the first slot and the third slot is greater than or equal to a second value.

7. The method according to claim 1, further comprising:
determining first PSFCH transmission executable by the first terminal, according to at least one of a transmission index value of at least one PSFCH transmission that is to be executed by the first terminal, a power of the at least one PSFCH transmission, a quantity of the at least one PSFCH transmission, a power threshold, and a quantity threshold, wherein the transmission index value is related to a type of PSFCH transmission and/or a priority of PSFCH transmission, and the first PSFCH transmission meets at least one of the following:

a total power of the first PSFCH transmission is less than or equal to the power threshold;

a quantity of the first PSFCH transmission is less than or equal to the quantity threshold; or

a quantity of the first PSFCH transmission is greater than or equal to a third value.

8. The method according to claim 7, wherein an index value of the first type of PSFCH transmission is less than an index value of the second type of PSFCH transmission, and the index value of the second type of PSFCH transmission is less than an index value of the third type of PSFCH transmission.

9. A sidelink transmission method, applied to a second terminal, comprising at least one of the following:

receiving first type of coordination information transmitted by a first terminal; or

receiving a physical sidelink feedback channel PSFCH transmitted by the first terminal, wherein the PSFCH transmission performed by the first terminal comprises at least one of the following:

first type of PSFCH transmission, used to carry hybrid automatic repeat request acknowledgement HARQ-ACK information;

second type of PSFCH transmission, used to carry second type of coordination information, wherein the second type of coordination information is conflict information; or

third type of PSFCH transmission, used to avoid interruption of channel occupancy time COT.

10. The method according to claim 9, further comprising:

transmitting coordination request information to the first terminal, wherein the coordination request information comprises at least one of the following:

a number of resource block sets RB sets, used to indicate a number of RB sets occupied for transmission of a physical sidelink control channel PSCCH and/or a physical sidelink shared channel PSSCH;

first RB set information, used to indicate a candidate RB set available for PSCCH and/or PSSCH transmission;

second RB set information, used to indicate an RB set on which the second terminal detects a consistent listen-before-talk C-LBT failure;

a first quantity of subchannels, used to indicate a quantity of subchannels occupied by PSCCH and/or PSSCH transmission in all occupied RB sets;

a resource reservation period;

a starting time of a resource selection window;

an ending time of a resource selection window; or

a resource set type, used to indicate a type of a resource set that is expected to be provided by the first terminal, wherein the type of the resource set comprises a preferred resource set and/or a non-preferred resource set.

11. A sidelink transmission apparatus, applied to a first terminal, comprising:

an execution module, wherein the execution module is configured to perform at least one of:

performing first type of coordination information transmission; or

performing physical sidelink feedback channel PSFCH transmission, wherein the PSFCH transmission comprises at least one of the following:

first type of PSFCH transmission, used to carry hybrid automatic repeat request acknowledgement HARQ-ACK information;

second type of PSFCH transmission, used to carry second type of coordination information, wherein the second type of coordination information is conflict information; or

third type of PSFCH transmission, used to avoid interruption of channel occupancy time COT.

12. A sidelink transmission apparatus, applied to a second terminal, comprising a receiving module, wherein the receiving module is configured to perform at least one of:

receiving first type of coordination information transmitted by a first terminal; or

receiving a PSFCH transmitted by the first terminal, wherein the PSFCH transmission performed by the first terminal comprises at least one of the following:

first type of PSFCH transmission, used to carry hybrid automatic repeat request acknowledgement HARQ-ACK information;

second type of PSFCH transmission, used to carry second type of coordination information, wherein the second type of coordination information is conflict information; or

third type of PSFCH transmission, used to avoid interruption of channel occupancy time COT.

13. A terminal, comprising a transceiver, a memory, a processor, and a computer program stored in the memory and running on the processor, wherein when executing the computer program, the processor implements the sidelink transmission method according to any one of claims 1 to 8, or the sidelink transmission method according to any one of claims 9 to 10.

14. A readable storage medium on which a program is stored, wherein the program is executed by a processor to implement the sidelink transmission method according to any one of claims 1 to 8, or the sidelink transmission method according to any one of claims 9 to 10.

Performing first type of coordination information transmission; and/or performing PSFCH transmission, where the PSFCH transmission comprises at least one of the following: first type of PSFCH transmission, used to carry HARQ-ACK information; second type of PSFCH transmission, used to carry second type of coordination information, where the second type of coordination information is conflict information; or third type of PSFCH transmission, used to avoid interruption of COT

101

FIG. 1

Receiving first type of coordination information transmitted by a first terminal; and/or receiving PSFCH transmission transmitted by the first terminal, where the PSFCH transmission performed by the first terminal comprises at least one of the following: first type of PSFCH transmission, used to carry HARQ-ACK information; second type of PSFCH transmission, used to carry second type of coordination information, where the second type of coordination information is conflict information; or third type of PSFCH transmission, used to avoid interruption of COT

201

FIG. 2

Resource combination 1

TRIV-1&FRIV1-1&FRIV2-1

Resource combination 2

TRIV-2&FRIV1-2&FRIV2-2

Resource combination 3

TRIV-3&FRIV1-3&FRIV2-3

n+T1

n+T2

Time

FIG. 3

Timeslot

Sub-channel

Resource association

Resource association

Resource indication

a

PSFCH period

b

←T3→

PSFCH

PSFCH

SCI of UE-B

IUC

Resource reserved by UE-B

FIG. 4A

Timeslot

Sub-channel

Resource association

Resource indication

a

PSFCH period

b

←T3→

PSFCH

PSFCH

SCI of UE-B

IUC

Resource reserved by UE-B

FIG. 4B

Resource
association

Timeslot

Sub-channel

Resource
association

Resource indication

a

PSFCH period

b

←T3→

PSFCH

PSFCH

SCI of UE-B

IUC

Resource reserved by UE-B

FIG. 4C

Timeslot

Resource
association

Resource indication

a

PSFCH period

b

T3

PSFCH

PSFCH

SCI of UE-B

IUC

Resource reserved by UE-B

FIG. 4D

Timeslot

Sub-channel

Resource association

Resource
association

Resource indication

a

PSFCH period

b

PSFCH

PSFCH

SCI of UE-B

IUC

Resource reserved by UE-B

FIG. 4E

FIG. 4F

FIG. 5A

FIG. 5B

FIG. 6

701

Receiving module

FIG. 7

800

Processor

820

Memory

Bus interface

810

Transceiver

830

User interface

FIG. 8

## INTERNATIONAL SEARCH REPORT

International application No.

**PCT/CN2024/120303**

### A. CLASSIFICATION OF SUBJECT MATTER

H04L 1/1812(2023.01)i

According to International Patent Classification (IPC) or to both national classification and IPC

### B. FIELDS SEARCHED

Minimum documentation searched (classification system followed by classification symbols)

IPC:H04L,H04W

Documentation searched other than minimum documentation to the extent that such documents are included in the fields searched

Electronic data base consulted during the international search (name of data base and, where practicable, search terms used)

CNTXT, ENTXT, DWPI, WPABS, CNKI, 3GPP: 直通链路传输, 协调, 优先级, 冲突, 反馈, PSFCH, HARQ, V2X, coordinate, priority, conflict, feedback

### C. DOCUMENTS CONSIDERED TO BE RELEVANT

| Category* | Citation of document, with indication, where appropriate, of the relevant passages | Relevant to claim No. |
|---|---|---|
| X | CN 115334473 A (DATANG GAOHONG ZHILIAN TECHNOLOGY (CHONGQING) CO., LTD.) 11 November 2022 (2022-11-11) claims 1-18, and description, paragraphs [0133]-[0190] | 1-14 |
| X | CN 112235765 A (GOHIGH DATA NETWORKS TECHNOLOGY CO., LTD.) 15 January 2021 (2021-01-15) claims 1-20, and description, paragraphs [0034]-[0102] | 1-14 |
| A | WO 2023155780 A1 (VIVO MOBILE COMMUNICATION CO., LTD.) 24 August 2023 (2023-08-24) entire document | 1-14 |
| A | CN 115915055 A (DATANG MOBILE COMMUNICATIONS EQUIPMENT CO., LTD.) 04 April 2023 (2023-04-04) entire document | 1-14 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **30 October 2024** | **05 November 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/120303**

| Patent document cited in search report | | | Publication date (day/month/year) | Patent family member(s) | Publication date (day/month/year) |
|---|---|---|---|---|---|
| CN | 115334473 | A | 11 November 2022 | None | |
| CN | 112235765 | A | 15 January 2021 | None | |
| WO | 2023155780 | A1 | 24 August 2023 | None | |
| CN | 115915055 | A | 04 April 2023 | None | |

Form PCT/ISA/210 (patent family annex) (July 2022)

**EP 4 761 155 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311459952